# EUROPEAN PATENT APPLICATION

(11) **EP 4 543 132 A1**
(43) Date of publication of application: **23.04.2025**
(21) Application number: 23843181.1
(22) Date of filing: 12.06.2023
(51) Int. Cl.: H04W 76/14, H04W 76/12, H04W 8/22, H04W 24/02, H04W 84/12, H04W 88/06

(54) **ELECTRONIC DEVICE CARRYING OUT D2D COMMUNICATION CONNECTION ON BASIS OF CAPABILITY INFORMATION OF EXTERNAL ELECTRONIC DEVICE, AND ELECTRONIC DEVICE OPERATION METHOD**

(30) Priority: 18.07.2022 KR 20220088470; 17.08.2022 KR 20220102657
(71) Applicant: Samsung Electronics Co., Ltd., Suwon-si, Gyeonggi-do 16677 (KR)
(72) Inventor: JUNG, Buseop, Suwon-si, Gyeonggi-do 16677 (KR); LEE, Soonho, Suwon-si, Gyeonggi-do 16677 (KR)
(74) Representative: HGF
(86) International application number: PCT/KR2023/008048
(87) International publication number: WO 2024/019328

(57) **Abstract**

The present invention relates to an electronic device and an electronic device operation method, according to various embodiments. The electronic device may comprise: a communication circuit which is connected to an access point (AP) through a communication channel of a first frequency band and carries out short-range wireless communication; and a processor which is operatively connected to the communication circuit. The processor, on the basis of data transmitted or received through the AP, may receive capability information of an external electronic device, related to a first communication scheme for generating a communication channel between the external electronic device and the electronic device. The processor, on the basis of the capability information of the external electronic device, related to the first communication scheme, and capability information of the AP, may check whether the external electronic device is capable of carrying out data transmission or reception through the first communication scheme which supports higher performance than a communication channel supported by the AP. The processor, on the basis of the result of checking, may be configured so as to carry out connection with the external electronic device by using one communication scheme among the first communication scheme, or a second communication scheme which enables the generation of a communication channel between the external electronic device and the electronic device without using the AP. Other various embodiments are possible.

## Description

### [Technical Field]

Various embodiments of the present disclosure relate to an electronic device carrying out D2D communication connection on the basis of capability information of an external electronic device, and operation method of the electronic device.

### [Background Art]

With the spread of various types of electronic devices, the speed improvement of wireless communication used by various electronic devices has been implemented. Among wireless communication supported by recent electronic devices, IEEE 802.11 WLAN (or Wi-Fi) is the standard for a high-speed wireless connection in various electronic devices. While the first Wi-Fi implementation could support a maximum transmission speed of 1 to 9 Mbps, Wi-Fi 6 technology (or IEEE 802.11 ax) can support a maximum transmission speed of approximately 10 Gbps.

An electronic device can support various services (for example, a video streaming service with an UHD level image quality, an augmented reality (AR) service, a virtual reality (VR) service, or a mixed reality (MR) service) using relatively high capacity data via wireless communication that supports a high transmission speed, and can also support various other services.

In the IEEE 802.11z WLAN standard, technology that supports data transmission or reception via a tunneled direct link setup (TDLS) scheme is defined. TDLS technology may be a technology that supports data transmission and/or reception of an electronic device without passing through an AP.

With the TDLS technology, at least one electronic device is connected to each other, and a plurality of electronic devices can transmit and/or receive data through direct device-to-device (D2D) connections without passing through an AP.

### [Disclosure of Invention]

### [Technical Problem]

An electronic device can generate a communication channel with an external electronic device through a TDLS scheme. However, the wireless communication channel between the electronic device and the external electronic device through the TDLS scheme may depend on the performance of short-range wireless communication. The wireless communication channel through the TDLS scheme may be implemented so that it cannot use a frequency band higher than the frequency band supported by an AP.

For example, the AP may support short-range wireless communication using a first frequency band (e.g., 2.4 GHz) and may not support short-range wireless communication using a second frequency band (e.g., 5 GHz) or third frequency band (e.g., 6 GHz). The electronic device and external electronic device may have the performance to support short-range wireless communication using the first frequency band (e.g., 2.4 GHz), the second frequency band (e.g., 5 GHz), and/or the third frequency band (e.g., 6 GHz). Although the electronic device and external electronic device can be directly connected through the second frequency band or third frequency band, due to limitations in the performance of the AP 210, communication must be performed through the TDLS scheme using a wireless communication channel of the first frequency band.

### [Solution to Problem]

An electronic device according to various embodiments of the disclosure may comprise a communication circuit which is connected to an access point (AP) through a communication channel of a first frequency band and performs short-range wireless communication, and a processor which is operatively connected to the communication circuit. The processor according to an embodiment, on the basis of data transmitted or received through the AP, may receive capability information of an external electronic device, related to a first communication scheme for generating a communication channel between the external electronic device and the electronic device. The processor according to an embodiment, on the basis of the capability information of the external electronic device, related to the first communication scheme, and capability information of the AP, may confirm whether the external electronic device is capable of performing data transmission or reception through the first communication scheme which supports higher performance than a communication channel supported by the AP. The processor according to an embodiment, on the basis of the result of confirming, may be configured so as to carry out connection with the external electronic device by using one communication scheme among the first communication scheme, or a second communication scheme which enables the generation of a communication channel between the external electronic device and the electronic device without using the AP.

An operation method of an electronic device according to various embodiments of the disclosure may comprise receiving, on the basis of data transmitted or received through an AP connected through a communication channel of a first frequency band, capability information of an external electronic device, related to a first communication scheme for generating a communication channel between the external electronic device and the electronic device. The operation method of an electronic device may comprise confirming, on the basis of the capability information of the external electronic device, related to the first communication scheme, and capability information of the AP, whether the external electronic device is capable of performing the first communication scheme which supports higher performance than a communication channel supported by the AP. The operation method of an electronic device may comprise performing, on the basis of the result of confirming, connection with the external electronic device by using one communication scheme among the first communication scheme and a second communication scheme which enables the generation of the communication channel between the external electronic device and the electronic device without using the AP.

### [Advantageous Effects of Invention]

An electronic device and operating method of an electronic device according to various embodiments of the disclosure can receive capability information of an external electronic device related to a first communication scheme, and confirm whether the external electronic device is capable of performing the first communication scheme supporting higher performance than a communication channel supported by an AP, on the basis of the capability information of the external electronic device related to the first communication scheme. In case that the external electronic device can perform the first communication scheme supporting higher performance than the communication channel supported by the AP, the electronic device can be connected to the external electronic device through the first communication scheme and transmit or receive data using a channel having better quality than the quality of a channel between the AP and the electronic device. Accordingly, the electronic device can perform communication through the first communication scheme that can exhibit maximum performance while taking a relatively short time to establish a communication channel, thereby improving communication quality.

### [Brief Description of Drawings]

FIG. 1 is a block diagram of an electronic device according to various embodiments of the disclosure.
FIG. 2 is a block diagram illustrating a short-range wireless communication system according to various embodiments of the disclosure.
FIG. 3A is a diagram illustrating an embodiment of configuring a tunneled direct link setup (TDLS) between electronic devices according to various embodiments of the disclosure.
FIG. 3B is a diagram illustrating an embodiment of connecting an electronic device and an external electronic device via Wi-Fi direct according to various embodiments of the disclosure.
FIG. 3C is a diagram illustrating a neighbor awareness network (NAN) cluster according to various embodiments of the disclosure.
FIG. 4 is a diagram illustrating an embodiment of performing data transmission and/or reception via TDLS in an electronic device according to various embodiments of the disclosure.
FIG. 5 is a block diagram of an electronic device according to various embodiments of the disclosure.
FIG. 6 is a diagram illustrating an embodiment of carrying out a connection through a first communication scheme in an electronic device according to various embodiments of the disclosure, depending on whether an external electronic device supports the first communication scheme using a communication channel having higher performance than a communication channel of a first frequency band between an AP and the electronic device.
FIG. 7 is a diagram illustrating an embodiment of carrying out a connection through a second communication scheme in an electronic device according to various embodiments of the disclosure, depending on whether an external electronic device supports a first communication scheme using a communication channel having higher performance than a communication channel of a first frequency band between an AP and the electronic device.
FIG. 8 is a diagram illustrating an embodiment of carrying out a connection through one communication scheme among a first communication scheme and a second communication scheme in an electronic device according to various embodiments of the disclosure, depending on whether an external electronic device supports the first communication scheme using a communication channel having higher performance than a communication channel of a first frequency band between an AP and the electronic device.
FIG. 9 is a flowchart illustrating an operation method of an electronic device according to various embodiments of the disclosure.

### [Mode for the Invention]

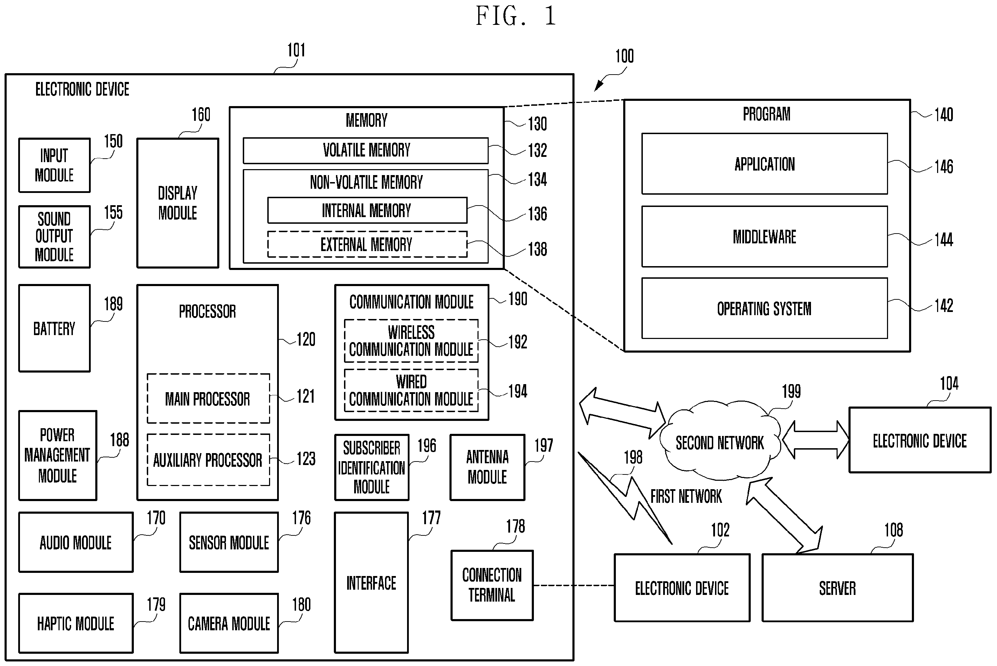

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

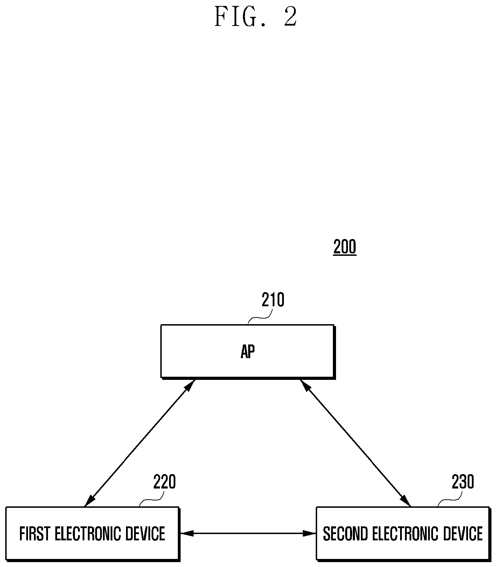

FIG. 2 is a block diagram illustrating a short-range wireless communication system according to various embodiments of the disclosure.

With reference to FIG. 2, a wireless LAN system 200 may include an access point (AP) 210, a first electronic device 220, and/or a second electronic device 230.

A first electronic device 220 may perform wireless communication with an AP 210 via short-range wireless communication. A second electronic device 230 may perform wireless communication with the AP 210 via short-range wireless communication. The short-range wireless communication may be a communication scheme that all of the first electronic device 220, the second electronic device 230, and/or the AP 210 may support. For example, wireless communication may be Wi-Fi. The AP 220 may serve as a base station that provides wireless communication to at least one electronic device (e.g., the first electronic device 220 and the second electronic device 230) located within the radius of communication of the wireless LAN system 200. For example, the AP 210 may include an access point (AP) of IEEE 802.11. The first electronic device 220 and second electronic device 230 may include a station (STA) of IEEE 802.11.

The short-range wireless communication used by the first electronic device 220 and/or the AP 210 to exchange data may utilize various frequency bands including a first frequency band (e.g., 2.4 GHz), a second frequency band (e.g., 5 GHz), and/or a third frequency band (e.g., 6 GHz). The first electronic device 220 and the AP 210 may establish a channel included in one of a plurality of frequency bands, and may exchange data by using the established channel.

The first electronic device 220 and second electronic device 230 may be directly connected via short-range wireless communication without passing through separate entities (e.g., the AP 210). A communication scheme in which the first electronic device 220 and second electronic device 230 are directly connected without passing through separate entities may be defined as a D2D communication scheme. The D2D communication scheme may include a first communication scheme (e.g., tunneled direct link setup (TDLS)) that exchanges required data through the AP 210 in the process of setting up (or establishing) a communication channel between the first electronic device 220 and the second electronic device 230, and a second communication scheme (e.g., Wi-Fi direct or neighbor awareness network (NAN)) that exchanges required data without passing through the AP 210 in the process of setting up (or establishing) a communication channel between the first electronic device 220 and the second electronic device 230.

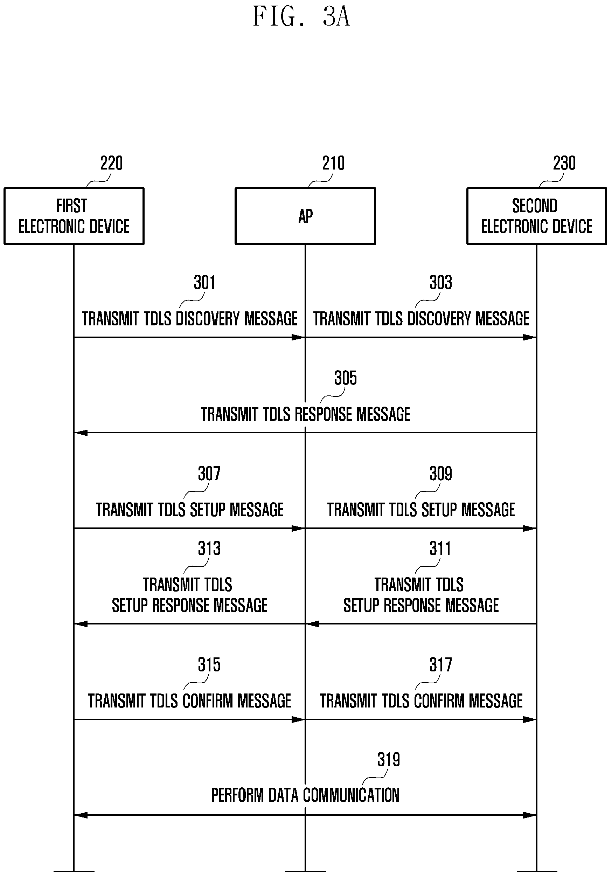

FIG. 3A is a diagram illustrating an embodiment of configuring a tunneled direct link setup (TDLS) between electronic devices according to various embodiments of the disclosure.

TDLS is a D2D communication scheme defined in IEEE 802.11z, and may refer to a communication scheme that may transmit or receive data between STAs without passing through the AP 210. The first electronic device 220 and second electronic device 230 may establish a direct communication channel without passing through the AP 210, and transmit or receive data through the established communication channel. The first electronic device 220 and second electronic device 230 may exchange data required for establishing a communication channel using the TDLS scheme through the AP 210.

The first electronic device 220 may transmit a TDLS discovery message to the AP 210 in operation 301. The TDLS discovery message may be a message for discovering an external electronic device (e.g., the second electronic device 230) to be connected to the first electronic device 220 via the TDLS scheme. The TDLS discovery message may include information of the first electronic device 220 related to the TDLS scheme (e.g., an address of the first electronic device 220, capability information of the first electronic device 220, information on a channel (or frequency band) supported by the first electronic device 220, and/or a channel (or frequency band) preferred by the first electronic device 220). The AP 210 may transmit the TDLS discovery message received from the first electronic device 220 to the second electronic device 230 in operation 303.

The second electronic device 230 may receive the TDLS discovery message generated by the first electronic device 220 from the AP 210. The second electronic device 230 may confirm the information of the first electronic device 220 related to the TDLS scheme included in the TDLS discovery message and generate a TDLS discovery response message. The TDLS discovery response message may include information of the second electronic device 230 related to the TDLS scheme (e.g., the address of the second electronic device 230, capability information of the second electronic device 230, information on a channel (or frequency band) supported by the second electronic device 230, and/or a channel (or frequency band) preferred by the second electronic device 230).

The second electronic device 230 may transmit a TDLS discovery response message to the first electronic device 220 in operation 305.

The first electronic device 220 may receive the TDLS discovery response message from the second electronic device 230 and may confirm information of the second electronic device 230 included in the TDLS discovery response message (e.g., an address of the second electronic device 230, capability information of the second electronic device 230, information on a channel (or frequency band) supported by the second electronic device 230, and/or a channel (or frequency band) preferred by the second electronic device 230). The first electronic device 220 may determine a channel supporting the TDLS scheme, on the basis of the information of the second electronic device 230. For example, the first electronic device 220 may select a channel corresponding to a frequency (or number) preferred by the second electronic device 230 and use the selected channel as a communication channel between the first electronic device 220 and the second electronic device 230.

In operation 307, the first electronic device 220 may transmit a TDLS setup message to the AP 210. The TDLS setup message may include identification information of the selected channel. In operation 309, the AP 210 may transmit the TDLS setup message received from the first electronic device 220 to the second electronic device 230.

The second electronic device 230 may confirm the identification information of the channel included in the TDLS setup message and perform a series of operations so it to be connected to the first electronic device 220 using the selected channel. The second electronic device 230 may perform a series of operations so it is connected to the first electronic device 220 using the selected channel, and then, in operation 311, transmit a TDLS setup response message to the AP 210. In operation 313, the AP 210 may transmit the TDLS setup response message received from the second electronic device 230 to the first electronic device 220.

After receiving the TDLS setup response message from the AP 210, in operation 315, the first electronic device 220 may transmit, to the AP 210, a TDLS confirm message (or TDLS setup confirm message) indicating that the TDLS setup response message of the TDLS has been confirmed (or received). In operation 317, the AP 210 may transmit the TDLS confirm message transmitted by the first electronic device 220 to the second electronic device 230.

In operation 319, the first electronic device 220 and second electronic device 230 may perform data communication through the selected channel.

With reference to the embodiment described above, the first electronic device 220 may target an electronic device (e.g., the second electronic device 230) connected to the AP 210 when discovering an electronic device to be connected through the TDLS scheme. Therefore, the TDLS scheme may implement a relatively fast discovery speed compared to other communication schemes. However, the TDLS scheme may only discover electronic devices connected to the same AP as the AP 210 connected to the first electronic device 220, and the connection of a channel implemented through the TDLS scheme may be released in case that the AP to which the first electronic device 220 is connected is changed.

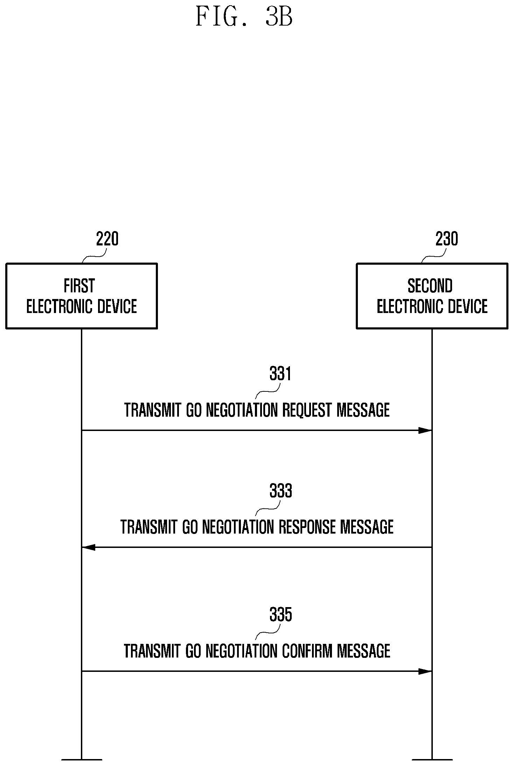

FIG. 3B is a diagram illustrating an embodiment in which a first electronic device and a second electronic device are connected via Wi-Fi direct according to various embodiments of the disclosure.

FIG. 3B illustrates messages exchanged during negotiation to determine a group owner (GO) while a first electronic device (e.g., the first electronic device 220 of FIG. 2) and a second electronic device (e.g., the second electronic device 230 of FIG. 2) are connected via short-range wireless communication (e.g., Wi-Fi direct).

In operation 331, the first electronic device 220 may transmit a GO negotiation request message to the second electronic device 230.

The first electronic device 220 may discover an external electronic device (e.g., the second electronic device 230) to be connected via short-range wireless communication in a discovery procedure, and may transmit a GO negotiation request message to the discovered second electronic device 230.

The GO negotiation request message may include P2P IE information and Wi-Fi simple configuration information element (WSC IE) information. The P2P IE information may include a GO intent and operating channel attribute information to be used for determining a GO. The operating channel attribute may include preferred channel information that is information related to a channel preferred by the first electronic device 220 among the channels capable of being established between the first electronic device 220 and the second electronic device 230, and/or preferred frequency band information that is information related to a frequency band preferred by the first electronic device 220. The preferred channel information may be included in a channel number field of an operating channel attribute field. The preferred frequency band information may be included in an operating class field of the operating channel attribute field.

In operation 333, the second electronic device 230 may transmit a GO negotiation response message to the first electronic device 220.

The GO negotiation response message may include P2P IE information and WSC IE information. The P2P IE information may include a GO intent and operating channel attribute information to be used for determining a GO. The operating channel attribute may include preferred channel information that is information related to a channel preferred by the second electronic device 230 among the channels capable of being established between the first electronic device 220 and the second electronic device 230, and/or preferred frequency band information that is information related to a frequency band preferred by the second electronic device 230. The preferred channel information may be included in a channel number field of an operating channel attribute field. The preferred frequency band information may be included in an operating class field of the operating channel attribute field.

The first electronic device 220 may receive the GO negotiation response message, and may compare the GO intent included in the GO negotiation response message and the GO intent included in the GO negotiation request message. An electronic device that has transmitted a higher GO intent value may be determined as a group owner (GO), and an electronic device that has transmitted a lower GO intent value may be determined as a group client (GC). The GO may operate as a host in a short-range wireless communication system, and the GC may operate as a client. For ease of description, it is assumed that the first electronic device 220 serves as a GO.

Based on the preferred channel of the first electronic device 220, the preferred frequency band of the first electronic device 220, the preferred channel of the second electronic device 230, and/or the preferred frequency band of the second electronic device 230, the first electronic device 220 may select a channel to be used for connecting the first electronic device 220 and the second electronic device 230.

In operation 335, the first electronic device 220 may transmit a GO negotiation confirm message (GO negotiation confirmation) to the second electronic device 230. The GO negotiation confirm message may include information on the selected channel.

With reference to the above-described embodiment, when discovering an electronic device to be connected via the Wi-Fi direct scheme, the first electronic device 220 may discover various electronic devices (e.g., the second electronic device 230) that support Wi-Fi direct regardless of the AP 210. Therefore, the Wi-Fi direct scheme may have a relatively slow discovery speed compared to other communication schemes (e.g., the TDLS scheme). However, the Wi-Fi direct scheme may not be affected by a change in the connection status of the first electronic device 220 to the AP 210.

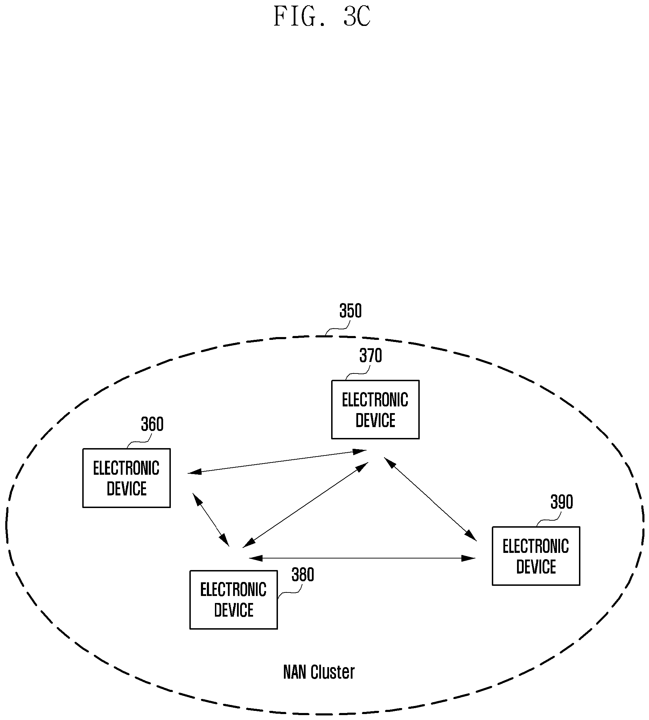

FIG. 3C is a diagram illustrating a neighbor awareness network (NAN) cluster according to various embodiments of the disclosure.

FIG. 3C may show a constitution example of a neighbor awareness networking (NAN) cluster 350 for a proximity network according to various embodiments. In the following description, the cluster 350 may refer to a set of electronic devices 360, 370, 380, or 390 in which a proximity network is constituted so that the respective electronic devices (or NAN devices) 360, 370, 380, or 390 (e.g., the electronic device 101 of FIG. 1) transmit and receive data to each other. For example, cluster 350 may be referred to as a NAN cluster according to NAN specifications (or standards).

With reference to FIG. 3C , the cluster 350 may be constituted with multiple electronic devices 360, 370, 380, or 390 . The electronic devices 360, 370, 380, or 390 included in the cluster 350 may transmit or receive a beacon (or discovery beacon) and/or a service discovery frame (SDF) (hereinafter, "SDF") within a synchronized time duration (or communication duration) (e.g., discovery (or search, discovering) window (discovery window (DW)).

In the electronic devices 360, 370, 380, or 390 in the cluster 350, time clocks may be synchronized with each other. For example, the electronic devices 360, 370, 380, or 390 may be synchronized with a time clock of one electronic device (e.g., the electronic device 360), and may exchange beacons and SDFs with each other in the same discovery window.

According to an embodiment, an electronic device supporting a NAN-based low-power short-range communication technology may broadcast a discovery signal (e.g., beacon) for discovering a different electronic device in each preconfigured first cycle (e.g., about 100 msec), and may perform scanning in each preconfigured second cycle (e.g., about 10 msec) so as to receive a discovery signal broadcast from another electronic device.

The electronic device 360, 370, 380, 390 may detect at least one other electronic device located around the electronic device, based on the received discovery signal via scanning, and may perform NAN cluster synchronization with the detected at least one other electronic device. The NAN cluster synchronization may include receiving time clock information of the electronic device representing the NAN cluster so that the electronic devices included in the NAN cluster transmit and/or receive data via the same channel and/or during the same time period.

For example, as illustrated in FIG. 3C, each of the multiple electronic devices 360, 370, 380, or 390 may transmit a beacon and receive beacons from other electronic devices 360, 370, 380, or 390 so that one cluster 350 operating according to a synchronized time clock may be formed, and the electronic devices 360, 370, 380, or 390 in the cluster 350 may perform NAN cluster synchronization.

Each of the electronic devices 360, 370, 380, or 390 in the cluster 350 may reduce current consumption by operating in an active state only during the discovery window and operating in a low-power state (e.g., a sleep state) during the remaining intervals outside the discovery window..

For example, the discovery window is a time period (e.g., milliseconds) in which the electronic device is in the active state (or wake state) and is consuming a large amount of current, whereas, in intervals outside the discovery window, the electronic device is in a sleep state in which low-power discovery may be possible.

The electronic devices 360, 370, 380, or 390 in the cluster 350 may be concurrently activated at a start time (e.g., DW start) of the synchronized discovery window, and may be concurrently switched to the sleep state at an end time (e.g., DW end) of the discovery window.

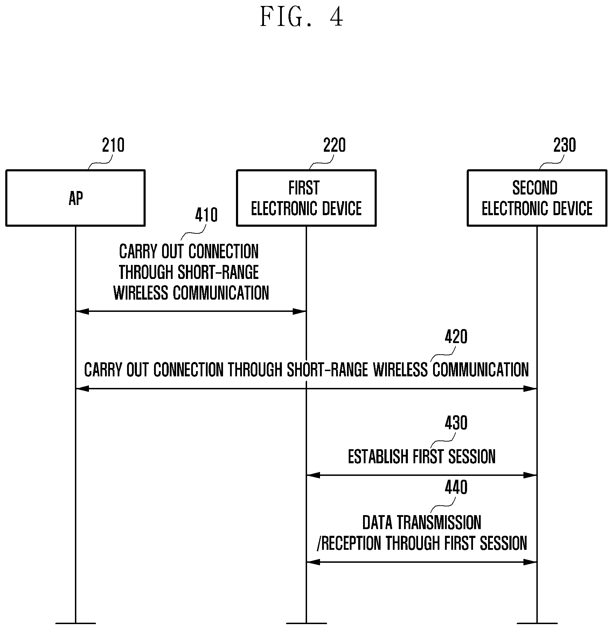

FIG. 4 is a diagram illustrating an embodiment of performing data transmission and/or reception via TDLS in an electronic device according to various embodiments of the disclosure.

With reference to FIG. 4, a first electronic device (e.g., the first electronic device 220 of FIG. 2) and an AP (e.g., the AP 210 of FIG. 2) may be connected via short-range wireless communication in operation 410.

The first electronic device 220 may perform wireless communication with the AP 210 via short-range wireless communication. The short-range wireless communication may refer to a communication scheme that both the first electronic device 220 and/or the AP 210 may support. For example, the wireless communication may be Wi-Fi. The AP 210 may serve as a base station that provides wireless communication to at least one electronic device (e.g., the first electronic device 220 and the second electronic device 230) located within a communication radius of a wireless LAN system (e.g., the wireless LAN system 200 of FIG. 2).

The first electronic device 220 and AP 210 may configure a channel for short-range wireless communication on the basis of the performance of short-range wireless communication of the first electronic device 220 and the performance of short-range wireless communication of the AP 210.

For example, the AP 210 may support short-range wireless communication using a first frequency band (e.g., 2.4 GHz) and may have a performance that does not support short-range wireless communication using a second frequency band (e.g., 5 GHz) or a third frequency band (e.g., 6 GHz). In this case, even if the first electronic device 220 may support short-range wireless communication using the first frequency band (e.g., 2.4 GHz), the second frequency band (e.g., 5 GHz), and/or the third frequency band (e.g., 6 GHz), short-range wireless communication between the first electronic device 220 and the AP 210 may be performed using the first frequency band.

The second electronic device (e.g., the second electronic device 230 of FIG. 2) and AP 210 may be connected via short-range wireless communication in operation 420.

The second electronic device 230 may perform wireless communication with the AP 210 via short-range wireless communication.

The second electronic device 230 and AP 210 may establish a channel for short-range wireless communication on the basis of the performance of short-range wireless communication of the second electronic device 230 and the performance of short-range wireless communication of the AP 210.

For example, the AP 210 may support short-range wireless communication using a first frequency band (e.g., 2.4 GHz) and may have a performance that does not support short-range wireless communication using a second frequency band (e.g., 5 GHz) or a third frequency band (e.g., 6 GHz). In this case, even if the second electronic device 230 may support short-range wireless communication using the first frequency band (e.g., 2.4 GHz), the second frequency band (e.g., 5 GHz), and/or the third frequency band (e.g., 6 GHz), the short-range wireless communication between the first electronic device 220 and the AP 210 may be performed using the first frequency band.

The first electronic device 220 and/or the second electronic device 230 may perform a series of operations to perform direct communication (e.g., D2D) without passing through the AP 210 due to occurrence of various situations. According to an embodiment, the first electronic device 220 and/or the second electronic device 230 may detect the execution of a specific application (e.g., an application for sharing data, an application for sharing content, or an application supporting mirroring) requiring direct communication between electronic devices or the execution of a function supported by the specific application, and perform a series of operations for performing direct communication between the devices. The series of operations for performing direct communication between the devices may include an operation for discovering an electronic device to be connected through direct communication, an operation for receiving information on the devices (e.g., capability information including whether the devices support direct communication, frequency bands supported by the devices, and/or channel information supported by the devices) to generate a session (or channel) supporting direct communication, and an operation for generating a session (or channel) based on the information on the devices. Hereinafter, it is assumed that the first electronic device 220 and second electronic device 230 perform direct communication using a tunneled direct link setup (TDLS) scheme. In case of performing direct communication in the TDLS scheme, the time required to discover an electronic device to be connected through direct communication may be reduced compared to other direct communications (e.g., Wi-Fi direct, NAN).

The first electronic device 220 may transmit information of the first electronic device 220 to the AP 210 through a channel generated between the first electronic device 220 and the AP 210, and the AP 210 may transmit information of the first electronic device 220 to the second electronic device 230 through a channel generated between the second electronic device 230 and the AP 210. The second electronic device 230 may transmit information of the second electronic device 230 to the AP 210 through a channel generated between the second electronic device 230 and the AP 210, and the AP 210 may transmit information of the second electronic device 230 to the first electronic device 220 through a channel generated between the first electronic device 220 and the AP 210.

The first electronic device 220 and second electronic device 230 may establish a first session in operation 430.

The first session may be a session generated through the TDLS scheme, and the first session may be a channel of a frequency band supported by both the first electronic device 220 and the second electronic device 230.

The first electronic device 220 and second electronic device 230 may transmit and/or receive data through the first session in operation 440.

However, the wireless communication channel of the first electronic device 220 and second electronic device 230 through the TDLS scheme may depend on the performance of the short-range wireless communication of the AP 210. The wireless communication channel through the TDLS scheme may be implemented so that it cannot use a frequency band higher than the frequency band supported by the AP 210.

For example, the AP 210 may support short-range wireless communication using a first frequency band (e.g., 2.4 GHz) and may have a performance that does not support short-range wireless communication using a second frequency band (e.g., 5 GHz) or a third frequency band (e.g., 6 GHz). The first electronic device 220 and second electronic device 230 may have a performance that supports short-range wireless communication using the first frequency band (e.g., 2.4 GHz), the second frequency band (e.g., 5 GHz), and/or the third frequency band (e.g., 6 GHz). The first electronic device 220 and second electronic device 230 may perform direct communication using a wireless communication channel of the first frequency band due to limitations in the performance of the AP 210, even though direct connection may be performed through the second frequency band or the third frequency band.

The first electronic device 220 and second electronic device 230 may transmit or receive data through a wireless communication channel of a scheme other than the TDLS scheme (e.g., NAN, Wi-Fi direct), but the quality of the wireless communication may be degraded due to the time required for the process of establishing a wireless communication channel supported by a scheme other than the TDLS scheme.

Hereinafter, an embodiment in which the first electronic device 220 and second electronic device 230 may perform wireless communication through the TDLS scheme without any limitations on the performance of the AP 210 is described.

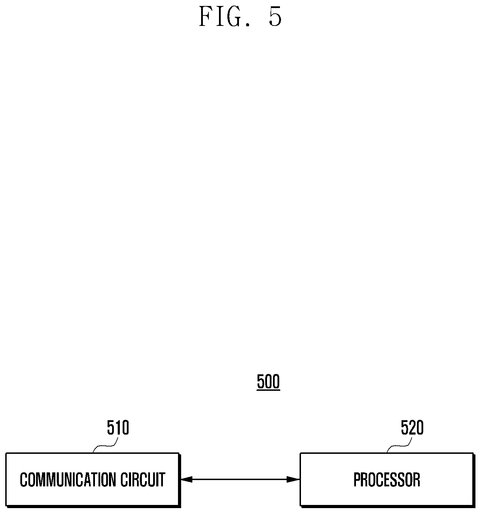

FIG. 5 is a block diagram of a first electronic device according to various embodiments of the disclosure.

According to various embodiments of the disclosure, an electronic device 500 (e.g., the electronic device 220 of FIG. 2) may include a communication circuit 510 (e.g., the wireless communication module 192 of FIG. 1) and a processor 520 (e.g., the processor 120 of FIG. 1).

The communication circuit 510 may be a communication circuit for supporting short-range wireless communication. The communication circuit 510 may include various circuit structures to be used to modulate and/or demodulate a signal in the first electronic device 500. For example, the communication circuit 510 may modulate a baseband signal into a radio frequency (RF) band signal so that the signal is output via an antenna (not illustrated), or may demodulate an RF band signal received via an antenna into a baseband signal and transmit the same to the processor 520.

The communication circuit 510 may perform short-range wireless communication via a first frequency band (e.g., 2.4 GHz), a second frequency band (e.g., 5 GHz) that is a frequency band higher than the first frequency band, and/or a third frequency band (e.g., 6 GHz) that is a frequency band higher than the second frequency band.

The communication circuit 510 may support short-range wireless communication using a higher frequency band than the maximum frequency band supported by the AP 210. For example, the AP 210 may support short-range wireless communication using a first frequency band and may not support short-range wireless communication using a second frequency band or a third frequency band. The communication circuit 510 may support data transmission or reception through one of a plurality of frequency bands including the first frequency band, the second frequency band that is a higher frequency band than the first frequency band, and/or the third frequency band. The communication circuit 510 may be connected to an AP (e.g., the AP 210 of FIG. 2) through the first frequency band supported by the AP 210 to transmit data to the AP 210 or receive data transmitted by the AP 210.

Based on the control by the processor 520, the communication circuit 510 may perform an operation of receiving a signal transmitted by an external electronic device (e.g., the second electronic device 230 of FIG. 3A). The communication circuit 510 may control components (e.g., low-noise amplifiers, switches and/or filters) of the communication circuit 510 to receive, from the processor 520, a signal that requests transmission and/or reception of data via a predetermined channel, and receive a signal via a frequency band corresponding to the predetermined channel.

The processor 520 may receive data transmitted from an application processor (e.g., the processor 120 of FIG. 1) and may produce a packet for transmitting the received data to an external electronic device (e.g., the second electronic device 230 of FIG. 3A). The processor 520 may be defined as a communication processor (or a communication processor) included in a communication module (e.g., the wireless communication module 192 of FIG. 1). According to an embodiment, the processor 520 may perform channel coding based on the data transmitted by the application processor 120 to produce a packet, may identify whether an error is present in at least part of data transmitted by the external electronic device (e.g., the second electronic device 230 of FIG. 3A), or may perform an error recovery (e.g., hybrid auto repeat request (HARQ)) in a case in which an error is incurred.

The processor 520 may be operatively connected to the communication circuit 510, to control operation of the communication circuit 510

The application processor 120 may execute an application installed in a memory (e.g., the memory 130 of FIG. 1) of the first electronic device 500. The executed application may be an application that performs a specific service (e.g., a content sharing service and/or a data transmission service) via short-range wireless communication. The specific service may be a service that requires an operation of transmitting and/or receiving data through a session to be generated between a first electronic device 500 and an external electronic device (e.g., the second electronic device 230 of FIG. 3A).

The processor 520 may perform a series of operations to perform a direct communication (D2D) connection via short-range wireless communication between the first electronic device 500 and an external electronic device (e.g., the second electronic device 230 of FIG. 3A) in order to perform a specific service provided by the application, depending on the execution of the application. A direct connection via short-range wireless communication between the first electronic device 500 and an external electronic device (e.g., the second electronic device 230 of FIG. 3A) may include a first communication scheme (e.g., the TDLS scheme), which is a communication scheme that establishes (or sets up) a communication channel based on data transmitted or received via the AP 210, and a second communication scheme (e.g., Wi-Fi direct and/or NAN), which is a communication scheme that establishes (or sets up) a communication channel based on data transmitted or received between the first electronic device 500 and an external electronic device (e.g., the second electronic device 230 of FIG. 3A) without passing through the AP 210.

The first communication scheme may discover based on the external electronic device (e.g., the second electronic device 230 of FIG. 3A) connected to the AP 210, and thus may provide a faster discovery speed compared to the second communication scheme in which a discovery target is not limited. Accordingly, the processor 520 may discover an external electronic device (e.g., the second electronic device 230 of FIG. 3A) to be connected through the first communication scheme in order to provide a faster service.

The processor 520 may discover (e.g., TDLS discovery, discovery using the AP 210 (e.g., universal plug and play (UPnP), multicast domain name system (mDNS), Bonjour scheme) the second electronic device 230 to be directly connected without passing through the first electronic device 500 and the AP 210. The second electronic device 230 discovered through the first communication scheme may be in a state connected to the AP 210 connected to the first electronic device 500.

According to another embodiment, the processor 520 may discover the second electronic device 230 to be connected through the first communication scheme through another short-range wireless communication scheme (e.g., Bluetooth low energy (BLE), Bluetooth and/or UWB). The first electronic device 500 may further include a second communication circuit (not illustrated) that supports another short-range wireless communication, and the processor 520 may control the second communication circuit to perform a process of discovering the second electronic device 230 connected through the first communication scheme.

The processor 520 may broadcast a discovery message (e.g., TDLS discover message) through a channel connected between the first electronic device 500 and the AP 210.

The discovery message may include information of the first electronic device 500 related to the first communication scheme (e.g., an address of the first electronic device 500, capability information of the first electronic device 500, a channel (or frequency band) supported by the first electronic device 500, and/or a channel (or frequency band) preferred by the first electronic device 500). The address of the first electronic device 500 included in the discovery message is an address used in case of receiving data via the first communication scheme, and may include a MAC address or an IP address. The capability information of the first electronic device 500 included in the discovery message is capability information related to the first communication scheme, and for example, the capability information may include a frequency band, a channel band, and/or a maximum number of channels that may be generated, that is capable of being supported by the first electronic device 500.

The second electronic device 230 that has received the discovery message through the AP 210 may confirm the information of the first electronic device 500 related to the first communication scheme included in the discovery message and generate a discovery response message corresponding to the discovery message.

The discovery response message may include information of the second electronic device 230 related to the first communication scheme (e.g., the address of the second electronic device 230, capability information of the second electronic device 230, a channel (or frequency band) supported by the second electronic device 230, and/or a channel (or frequency band) preferred by the second electronic device 230). The address of the second electronic device 230 included in the discovery response message is an address used in case of receiving data through the first communication scheme and may include a MAC address or an IP address. The capability information of the second electronic device 230 included in the discovery message is capability information related to the first communication scheme, and for example, the capability information may include a frequency band, a channel band, and/or a maximum number of sessions that may be generated, that is capable of being supported by the second electronic device 230.

The capability information of the second electronic device 230 may include capability information of the second electronic device 230 related to the first communication scheme.

The capability information of the second electronic device 230 related to the first communication scheme may include information indicating whether the second electronic device 230 supports device-to-device communication using the first communication scheme.

The capability information of the second electronic device 230 related to the first communication scheme may include capability information of the second electronic device 230 related to short-range wireless communication (e.g., Wi-Fi). The capability information of the second electronic device 230 related to the short-range wireless communication may include the frequency band of the short-range wireless communication supported by the second electronic device 230 (e.g., the first frequency band, the second frequency band, and/or the third frequency band), the standard information of the short-range wireless communication supported by the second electronic device 230 (e.g., 802.11ac, 802.11ax, 802.11be), and/or the bandwidth of the channel of the short-range wireless communication supported by the second electronic device 230 (e.g., 80MHz).

The capability information of the second electronic device 230 related to the first communication scheme may include maximum capability information, which is capability information of the short-range wireless communication with the best performance among the short-range wireless communications supported by the second electronic device 230. For example, the capability information of the second electronic device 230 related to short-range wireless communication may include the maximum frequency band of short-range wireless communication supported by the second electronic device 230 (e.g., the third frequency band), the standard with the best performance among the standards of short-range wireless communication supported by the second electronic device 230 (e.g., 802.11be), and/or the largest bandwidth among the bandwidths of the channel of short-range wireless communication supported by the second electronic device 230 (e.g., 80MHz).

The capability information of the second electronic device 230 related to the first communication scheme may include information indicating whether the second electronic device 230 supports the first communication scheme that may implement better performance than the performance of short-range wireless communication supported by the AP 210.

The first communication scheme that may implement better performance than the performance of short-range wireless communication supported by the AP 210 may mean device-to-device communication using a higher frequency band than the frequency band supported by the AP 210.

For example, in case that the AP 210 supports data transmission or reception using the first frequency band and does not support data transmission or reception using the second frequency band and/or the third frequency band, but the second electronic device 230 supports the first communication scheme through a communication channel of the first frequency band, the second frequency band, and/or the third frequency band, the second electronic device 230 may be an electronic device that supports the first communication scheme that may implement better performance than the performance of the short-range wireless communication supported by the AP 210.

In case that the second electronic device 230 supports the first communication scheme that may implement better performance than the performance of the short-range wireless communication supported by the AP 210, the second electronic device 230 may transmit, to the first electronic device 500, capability information of the second electronic device 230 related to the first communication scheme, which includes information indicating that the second electronic device 230 supports the first communication scheme that may implement better performance than the performance of the short-range wireless communication supported by the AP 210.

For another example, in case that the AP 210 supports data transmission or reception using the first frequency band and does not support data transmission or reception using the second frequency band and/or the third frequency band, but the second electronic device 230 supports the first communication scheme through the communication channel of the first frequency band and does not support the first communication scheme through the communication channel of the second frequency band and/or the third frequency band (e.g., supporting performance dependent on the AP 210), the second electronic device 230 may be an electronic device that does not support the first communication scheme that may implement better performance than the performance of the short-range wireless communication supported by the AP 210.

**In** case that the second electronic device 230 does not support the first communication scheme that may implement better performance than the performance of the short-range wireless communication supported by the AP 210, the second electronic device 230 may transmit, to the first electronic device 500, capability information of the second electronic device 230 related to the first communication scheme, which includes information indicating that the second electronic device 230 does not support the first communication scheme that may implement better performance than the performance of the short-range wireless communication supported by the AP 210.

The capability information of the second electronic device 230 related to the first communication scheme may include information indicating whether the second electronic device 230 may perform data transmission or reception in a state where both the communication channel between the AP 210 and the second electronic device 230 and the communication channel using the first communication scheme that may implement better performance than the performance of the short-range wireless communication supported by the AP 210 are activated.

Depending on the performance of the communication circuit of the second electronic device 230, the second electronic device 230 may support a function (e.g., real simultaneous dual band (RSDB) and/or dual band simultaneous (DBS)) that enables the second electronic device 230 to simultaneously perform a signal transmission and/or reception operation through a communication channel between the AP 210 and the second electronic device 230 and a signal transmission and/or reception operation through a communication channel using a first communication scheme that may implement better performance than the performance of short-range wireless communication supported by the AP 210.

In case that the AP 210 and second electronic device 230 are connected through a communication channel of a first frequency band, and the first electronic device 500 may be connected to the second electronic device 230 through a third frequency band, and the communication circuit of the second electronic device 230 may perform transmission and/or reception of a signal through the third frequency band while performing transmission and/or reception of a signal through the first frequency band, the second electronic device 230 may perform data transmission or reception in a state where both the communication channel between the AP 210 and the second electronic device 230 and the communication channel using the first communication scheme that may implement better performance than the performance of the short-range wireless communication supported by the AP 210 are activated. The second electronic device 230 may transmit, to the first electronic device 500, capability information of the second electronic device 230 related to the first communication scheme, which includes information indicating that the second electronic device 230 may perform data transmission or reception in a state where both the communication channel between the AP 210 and the second electronic device 230 and the communication channel using the first communication scheme that may implement better performance than the performance of the short-range wireless communication supported by the AP 210 are activated.

In case that the AP 210 and second electronic device 230 are connected through a communication channel of a first frequency band, and the first electronic device 500 may be connected to the second electronic device 230 through a third frequency band, and the communication circuit of the second electronic device 230 may not perform transmission and/or reception of a signal through the third frequency band while performing transmission and/or reception of a signal through the first frequency band, the second electronic device 230 may not perform data transmission or reception in a state where both the communication channel between the AP 210 and the second electronic device 230 and the communication channel using the first communication scheme that may implement better performance than the performance of the short-range wireless communication supported by the AP 210 are activated. The second electronic device 230 may transmit, to the first electronic device 500, capability information of the second electronic device 230 related to the first communication scheme, which includes information indicating that the second electronic device 230 may not perform data transmission or reception in a state where both the communication channel between the AP 210 and the second electronic device 230 and the communication channel using the first communication scheme that may implement better performance than the performance of the short-range wireless communication supported by the AP 210 are activated.

The capability information of the second electronic device 230 related to the first communication scheme may include status information related to the first communication scheme of the second electronic device 230.

The status information related to the first communication scheme of the second electronic device 230 may include information indicating whether the second electronic device 230 is currently capable of establishing a communication channel using the first communication scheme.

The second electronic device 230 may not be able to establish a communication channel using the first communication scheme with the first electronic device 500 due to various situations (e.g., the second electronic device 230 may transmit or receive data through a communication channel using the first communication scheme with another electronic device). The second electronic device 230 may transmit, to the first electronic device 500, capability information of the second electronic device 230 including information indicating that the second electronic device 230 is currently unable to establish a communication channel using the first communication scheme.

The capability information of the second electronic device 230 related to the first communication scheme may include various information in addition to the examples described above.

The processor 520 may confirm whether the second electronic device 230 is capable of performing the first communication scheme using a communication channel that supports a higher performance than the performance of the communication channel supported by the AP 210, on the basis of the capability information of the second electronic device 230 related to the first communication scheme.

The processor 520 may confirm whether the second electronic device 230 is capable of supporting short-range wireless communication of a higher frequency band than the frequency band of the communication channel supported by the AP 210, on the basis of the capability information of the second electronic device 230 related to short-range wireless communication (e.g., Wi-Fi), which is included in the capability information of the second electronic device 230 related to the first communication scheme.

The processor 520 may confirm whether the second electronic device 230 is capable of performing the first communication scheme supporting higher performance than the performance of the communication channel supported by the AP 210, on the basis of information indicating whether the second electronic device 230 supports the first communication scheme that implements better performance than the performance of the short-range wireless communication supported by the AP 210, which is included in the capability information of the second electronic device 230 related to the first communication scheme.

The processor 520 may confirm that the second electronic device 230 is capable of performing the first communication scheme supporting higher performance than the performance of the communication channel supported by the AP 210 and may confirm whether the second electronic device 230 is currently capable of performing communication using the first communication scheme supporting higher performance than the performance of the communication channel supported by the AP 210, on the basis of status information related to the first communication scheme of the second electronic device 230, which is included in the capability information of the second electronic device 230 related to the first communication scheme.

The processor 520 may control the communication circuit 510 to connect with the second electronic device 230 through the first communication scheme, on the basis of the confirming that the second electronic device 230 is currently capable of performing communication using the first communication scheme that supports higher performance than the performance of the communication channel supported by the AP 210.

The processor 520 may control the communication circuit 510 to transmit a TDLS setup message to the AP 210. The AP 210 may transmit the TDLS setup message to the second electronic device 230. The TDLS setup message may include identification information of a selected channel, and the selected channel may be a channel of a higher frequency band than a frequency band supported by the AP 210.

The processor 520 may control the communication circuit 510 to select a channel to be generated between the first electronic device 500 and the second electronic device 230 based on the capability information of the second electronic device 230 related to the first communication scheme, and transmit the TDLS setup message including the selected channel to the AP 210.

The processor 520 may confirm the same frequency band among the frequency bands supported by the first electronic device 500 and the frequency bands supported by the second electronic device 230, and select one of the same frequency bands (e.g., a communication channel of the highest frequency band) as the communication channel to be generated between the first electronic device 500 and the second electronic device 230. The processor 520 may select one of at least one channel included in one of the same frequency bands as the communication channel to be generated between the first electronic device 500 and the second electronic device 230.

The second electronic device 230 may confirm the identification information of the channel included in the TDLS setup message and perform a series of operations so that it may be connected to the first electronic device 500 using the selected channel. The second electronic device 230 may perform a series of operations so that it may be connected to the first electronic device 500 using the selected channel, and then transmit the TDLS setup response message to the AP 210. The AP 210 may transmit the TDLS setup response message received from the second electronic device 230 to the first electronic device 500.

The processor 520 may control the communication circuit 510 to transmit a TDLS confirm message (or TDLS setup confirm message) indicating that the TDLS setup response message has been confirmed (or received) to the AP 210 after receiving the TDLS setup response message from the AP 210. The AP 210 may transmit the TDLS confirm message transmitted by the first electronic device 500 to the second electronic device 230.

The first electronic device 500 and second electronic device 230 may perform data communication through the selected channel.

The processor 520 may control the communication circuit 510 to connect with the second electronic device 230 through the second communication scheme, on the basis of the confirmation that the second electronic device 230 cannot currently perform communication using the first communication scheme that supports higher performance than the performance of the communication channel supported by the AP 210 or the confirmation that the second electronic device 230 does not support the first communication scheme that supports higher performance than the performance of the communication channel supported by the AP 210.

According to an embodiment, in case that the second communication scheme is Wi-Fi direct, the processor 520 may be connected to the second electronic device 230 through the second communication scheme in a manner of performing group owner (GO) negotiation defined in Wi-Fi direct with the second electronic device 230.

According to an embodiment, in case that the second communication scheme is NAN, the processor 520 may be connected to the second electronic device 230 through the second communication scheme in a manner of performing NAN cluster negotiation and synchronization with the second electronic device 230.

The second communication scheme is a communication scheme that searches the first electronic device 500 and the second electronic device 230 without passing through the AP 210, and thus, the time required to set up the communication channel may be longer than that of the first communication scheme. However, since it may not be affected by the performance of the AP 210, a relatively high transmission speed or reception speed may be implemented.

The processor 520 may compare the maximum performance of the first communication scheme with the maximum performance of the second communication scheme, and control the communication circuit 510 to carry out a connection with the second electronic device 230 through one communication scheme among the first communication scheme and the second communication scheme based on the comparison result.

The maximum performance of the first communication scheme may include a standard (e.g., IEEE 802.11ax, 802.11be) and/or bandwidth (e.g., 80MHz) of a short-range wireless communication used when the second electronic device 230 transmits to the first electronic device 500 through the first communication scheme, and the maximum performance of the second communication scheme may include a standard (e.g., IEEE 802.11ax, 802.11be) and/or bandwidth (e.g., 80MHz) of a short-range wireless communication used when the second electronic device 230 transmits to the first electronic device 500 through the second communication scheme.

The processor 520 may confirm the maximum performance of the first communication scheme and/or the maximum performance of the second communication scheme, on the basis of the capability information of the second electronic device 230 related to the first communication scheme (or the maximum capability information of the second electronic device 230 related to the short-range wireless communication, which is included in the capability information of the second electronic device 230 related to the first communication scheme).

The processor 520 may compare the maximum performance of the first communication scheme and the maximum performance of the second communication scheme, and control the communication circuit 510 to connect with the second electronic device 230 through the first communication scheme, on the basis of confirming that the maximum performance of the first communication scheme is substantially the same as the maximum performance of the second communication scheme.

The processor 520 may compare the maximum performance of the first communication scheme and the maximum performance of the second communication scheme, and control the communication circuit 510 to connect with the second electronic device 230 through the second communication scheme, on the basis of confirming that the maximum performance of the first communication scheme is lower than the maximum performance of the second communication scheme.

Through the above scheme, the first electronic device 500 may carry out a device-to-device connection with the second electronic device 230 through the first communication scheme in case that the first communication scheme is not constrained by the performance of the AP 210. The first electronic device 500 may carry out a device-to-device connection with the second electronic device 230 through the second communication scheme in case that the first communication scheme is constrained by the performance of the AP 210, thereby performing a short-range wireless communication of relatively high quality.

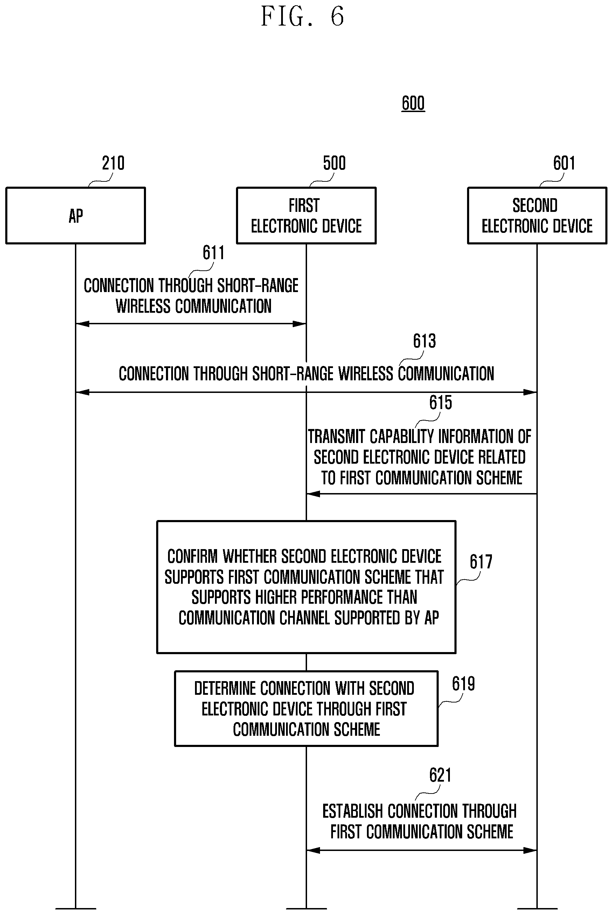

FIG. 6 is a diagram illustrating an embodiment 600 of carrying out a connection through a first communication scheme in an electronic device according to various embodiments of the disclosure, depending on whether an external electronic device supports the first communication scheme using a communication channel having higher performance than a communication channel of a first frequency band between an AP and the electronic device.

With reference to FIG. 6, a first electronic device (e.g., the first electronic device 500 of FIG. 5) may be connected to the AP 210 via short-range wireless communication in operation 611.

The first electronic device 500 may support short-range wireless communication using a frequency band higher than the maximum frequency band supported by the AP 210. For example, the AP 210 may support short-range wireless communication using a first frequency band and may not support short-range wireless communication using a second frequency band or a third frequency band. The first electronic device 500 may perform data transmission or reception through one of a plurality of frequency bands including the second frequency band and/or the third frequency band, which are higher frequency bands than the first frequency band. However, the first electronic device 510 may be connected to the AP 210 through the first frequency band, and may transmit data to the AP 210 or receive data transmitted by the AP 210.

A second electronic device 601 (e.g., the second electronic device 230 of FIG. 2) may be connected to the AP 210 via short-range wireless communication in operation 613.

The second electronic device 601 may support short-range wireless communication using a frequency band higher than the maximum frequency band supported by the AP 210. For example, the AP 210 may support short-range wireless communication using a first frequency band and may not support short-range wireless communication using a second frequency band or a third frequency band. The second electronic device 601 may perform data transmission or reception through one of a plurality of frequency bands including the second frequency band and/or the third frequency band, which are higher frequency bands than the first frequency band. However, the second electronic device 601 may be connected to the AP 210 through the first frequency band, and may transmit data to the AP 210 or receive data transmitted by the AP 210.

The first electronic device 500 may perform a series of operations to perform a direct communication (D2D) connection through short-range wireless communication between the first electronic device 500 and the second electronic device 601 in order to perform a specific service provided by an application, depending on the execution of the application.

The first electronic device 500 may perform a series of operations to perform a direct communication (D2D) connection through short-range wireless communication between the first electronic device 500 and the second electronic device 601 in order to perform a specific service provided by an application, depending on the execution of the application. A direct connection via short-range wireless communication between the first electronic device 500 and the second electronic device 601 may include a first communication scheme (e.g., TDLS scheme) that establishes (or sets up) a communication channel based on data transmitted or received via the AP 210, and a second communication scheme (e.g., Wi-Fi direct and/or NAN) that establishes (or sets up) a communication channel based on data transmitted or received between the first electronic device 500 and the second electronic device 601 without passing through the AP 210.

The first electronic device 500 may discover (e.g., TDLS discovery, discovery scheme (e.g., UPnP, mDNS, Bonjour) using the AP 210) the second electronic device 601 to be directly connected without passing through the first electronic device 500 and the AP 210. The second electronic device 601 discovered through the first communication scheme may be in a state connected to the AP 210 connected to the first electronic device 500.

The first electronic device 500 may broadcast a discovery message (e.g., TDLS discover message) through a channel connected between the first electronic device 500 and the AP 210.

The discovery message may include information of the first electronic device 500 related to the first communication scheme (e.g., an address of the first electronic device 500, capability information of the first electronic device 500, a channel (or frequency band) supported by the first electronic device 500, and/or a channel (or frequency band) preferred by the first electronic device 500). The address of the first electronic device 500 included in the discovery message is an address used in case of receiving data via the first communication scheme, and may include a MAC address or an IP address. The capability information of the first electronic device 500 included in the discovery message is capability information related to the first communication scheme, and for example, the capability information may include a frequency band, a channel band, and/or a maximum number of sessions that may be generated, that is capable of being supported by the first electronic device 500.

According to an embodiment, in operation 615, the second electronic device 601 may transmit, to the first electronic device 500, capability information of the second electronic device 601 related to the first communication scheme.

The second electronic device 601 that has received the discovery message through the AP 210 may confirm the information of the first electronic device 500 related to the first communication scheme included in the discovery message and generate a discovery response message corresponding to the discovery message.

The discovery response message may include information of the second electronic device 601 related to the first communication scheme (e.g., the address of the second electronic device 601, capability information of the second electronic device 601, a channel (or frequency band) supported by the second electronic device 601, and/or a channel (or frequency band) preferred by the second electronic device 601). The address of the second electronic device 601 included in the discovery response message is an address used in case of receiving data through the first communication scheme and may include a MAC address or an IP address. The capability information of the second electronic device 601 included in the discovery message is capability information related to the first communication scheme, and for example, the capability information may include a frequency band, a channel band, and/or a maximum number of sessions that may be generated, that is capable of being supported by the second electronic device 601.

The capability information of the second electronic device 601 may include capability information of the second electronic device 601 related to the first communication scheme.

The capability information of the second electronic device 601 related to the first communication scheme may include information indicating whether the second electronic device 601 supports device-to-device communication using the first communication scheme.

The capability information of the second electronic device 601 related to the first communication scheme may include capability information of the second electronic device 601 related to short-range wireless communication (e.g., Wi-Fi). The capability information of the second electronic device 601 related to the short-range wireless communication may include the frequency band of the short-range wireless communication supported by the second electronic device 601 (e.g., the first frequency band, the second frequency band, and/or the third frequency band), the standard information of the short-range wireless communication supported by the second electronic device 601 (e.g., 802.11ac, 802.11ax, 802.11be), and/or the bandwidth of the channel of the short-range wireless communication supported by the second electronic device 601 (e.g., 80MHz).

The capability information of the second electronic device 601 related to the first communication scheme may include maximum capability information, which is capability information of the short-range wireless communication with the best performance among the short-range wireless communications supported by the second electronic device 601. For example, the capability information of the second electronic device 601 related to short-range wireless communication may include the maximum frequency band of short-range wireless communication supported by the second electronic device 601 (e.g., the third frequency band), the standard with the best performance among the standards of short-range wireless communication supported by the second electronic device 601 (e.g., 802.11be), and/or the largest bandwidth among the bandwidths of the channel of short-range wireless communication supported by the second electronic device 601 (e.g., 80MHz).

The capability information of the second electronic device 601 related to the first communication scheme may include information indicating whether the second electronic device 601 supports the first communication scheme that may implement better performance than the performance of short-range wireless communication supported by the AP 210.

The first communication scheme that may implement better performance than the performance of short-range wireless communication supported by the AP 210 may mean device-to-device communication using a higher frequency band than the frequency band supported by the AP 210.

For example, in case that the AP 210 supports data transmission or reception using the first frequency band and does not support data transmission or reception using the second frequency band and/or the third frequency band, but the second electronic device 601 supports the first communication scheme through a communication channel of the first frequency band, the second frequency band, and/or the third frequency band, the second electronic device 601 may be an electronic device that supports the first communication scheme that may implement better performance than the performance of the short-range wireless communication supported by the AP 210.

In case that the second electronic device 601 supports the first communication scheme that may implement better performance than the performance of the short-range wireless communication supported by the AP 210, the second electronic device 601 may transmit, to the first electronic device 500, capability information of the second electronic device 601 related to the first communication scheme, which includes information indicating that the second electronic device 601 supports the first communication scheme that may implement better performance than the performance of the short-range wireless communication supported by the AP 210.

For another example, in case that the AP 210 supports data transmission or reception using the first frequency band and does not support data transmission or reception using the second frequency band and/or the third frequency band, but the second electronic device 601 supports the first communication scheme through the communication channel of the first frequency band and does not support the first communication scheme through the communication channel of the second frequency band and/or the third frequency band (e.g., supporting performance dependent on the AP 210), the second electronic device 601 may be an electronic device that does not support the first communication scheme that may implement better performance than the performance of the short-range wireless communication supported by the AP 210.

In case that the second electronic device 601 does not support the first communication scheme that may implement better performance than the performance of the short-range wireless communication supported by the AP 210, the second electronic device 601 may transmit, to the first electronic device 500, capability information of the second electronic device 601 related to the first communication scheme, which includes information indicating that the second electronic device 601 does not support the first communication scheme that may implement better performance than the performance of the short-range wireless communication supported by the AP 210.

The capability information of the second electronic device 601 related to the first communication scheme may include information indicating whether the second electronic device 601 may perform data transmission or reception in a state where both the communication channel between the AP 210 and the second electronic device 601 and the communication channel using the first communication scheme that may implement better performance than the performance of the short-range wireless communication supported by the AP 210 are activated.

Depending on the performance of the communication circuit of the second electronic device 601, the second electronic device 601 may support a function (e.g., real simultaneous dual band (RSDB) and/or dual band simultaneous (DBS)) that enables the second electronic device 601 to simultaneously perform a transmission and/or reception operation of a signal through a communication channel between the AP 210 and the second electronic device 601 and a transmission and/or reception operation of a signal through a communication channel using the first communication method that may implement better performance than the performance of short-range wireless communication supported by the AP 210.

In case that the AP 210 and second electronic device 601 are connected through a communication channel of a first frequency band, and the first electronic device 500 may be connected to the second electronic device 601 through a third frequency band, and the communication circuit of the second electronic device 601 may perform transmission and/or reception of a signal through the third frequency band while performing transmission and/or reception of a signal through the first frequency band, the second electronic device 601 may perform data transmission or reception in a state where both the communication channel between the AP 210 and the second electronic device 601 and the communication channel using the first communication scheme that may implement better performance than the performance of the short-range wireless communication supported by the AP 210 are activated. The second electronic device 601 may transmit, to the first electronic device 500, capability information of the second electronic device 601 related to the first communication scheme, which includes information indicating that the second electronic device 601 may perform data transmission or reception in a state where both the communication channel between the AP 210 and the second electronic device 601 and the communication channel using the first communication scheme that may implement better performance than the performance of the short-range wireless communication supported by the AP 210 are activated.

In case that the AP 210 and second electronic device 601 are connected through a communication channel of a first frequency band, and the first electronic device 500 may be connected to the second electronic device 601 through a third frequency band, and the communication circuit of the second electronic device 601 may not perform transmission and/or reception of a signal through the third frequency band while performing transmission and/or reception of a signal through the first frequency band, the second electronic device 601 may not perform data transmission or reception in a state where both the communication channel between the AP 210 and the second electronic device 601 and the communication channel using the first communication scheme that may implement better performance than the performance of the short-range wireless communication supported by the AP 210 are activated. The second electronic device 601 may transmit, to the first electronic device 500, capability information of the second electronic device 601 related to the first communication scheme, which includes information indicating that the second electronic device 601 may not perform data transmission or reception in a state where both the communication channel between the AP 210 and the second electronic device 601 and the communication channel using the first communication scheme that may implement better performance than the performance of the short-range wireless communication supported by the AP 210 are activated.

The capability information of the second electronic device 601 related to the first communication scheme may include status information related to the first communication scheme of the second electronic device 601.

The status information related to the first communication scheme of the second electronic device 601 may include information indicating whether the second electronic device 601 is currently capable of establishing a communication channel using the first communication scheme.

The second electronic device 601 may not be able to establish a communication channel using the first communication scheme with the first electronic device 500 due to various situations (e.g., the second electronic device 601 may transmit or receive data through a communication channel using the first communication scheme with another electronic device). The second electronic device 601 may transmit, to the first electronic device 500, capability information of the second electronic device 601 including information indicating that the second electronic device 601 is currently unable to establish a communication channel using the first communication scheme.

The capability information of the second electronic device 601 related to the first communication scheme may include various information in addition to the examples described above.

The capability information of the second electronic device 601 may be transmitted to the first electronic device 500 through various schemes. For example, the second electronic device 601 may transmit, to the first electronic device 500, the capability information of the second electronic device 601 related to the first communication scheme, through a discovery protocol based on the AP 210 (e.g., a discovery protocol based on layer 3 (e.g., UPnP, mDNS, or Bonjour)). For example, the second electronic device 601 may also transmit the capability information of the second electronic device 601 related to the first communication scheme to the first electronic device 500 through another short-range wireless communication (e.g., Bluetooth, BLE). For example, the capability information of the second electronic device 601 may be requested from a server (e.g., the server 108) by the first electronic device, and may be transmitted to the first electronic device 500 through the server.

According to an embodiment, in operation 617, the first electronic device 500 may confirm whether the second electronic device supports the first communication scheme that supports higher performance than the performance of a communication channel supported by the AP 210.

The first electronic device 500 may confirm whether the second electronic device 601 is capable of performing the first communication scheme that supports higher performance than the performance of the communication channel supported by the AP 210, on the basis of the capability information of the second electronic device 601 related to the first communication scheme.

The first electronic device 500 may confirm whether the second electronic device 601 is capable of supporting short-range wireless communication of a higher frequency band than the frequency band of the communication channel supported by the AP 210, on the basis of the capability information of the second electronic device 601 related to short-range wireless communication (e.g., Wi-Fi), which is included in the capability information of the second electronic device 601 related to the first communication scheme.

The first electronic device 500 may confirm whether the second electronic device 601 is capable of performing the first communication scheme supporting higher performance than the performance of the communication channel supported by the AP 210, on the basis of information indicating whether the second electronic device 601 supports the first communication scheme that implements better performance than the performance of the short-range wireless communication supported by the AP 210, which is included in the capability information of the second electronic device 601 related to the first communication scheme.

The first electronic device 500 may confirm that the second electronic device 601 is capable of performing the first communication scheme supporting higher performance than the performance of the communication channel supported by the AP 210, and may confirm whether the second electronic device 601 is currently capable of performing communication using the first communication scheme supporting higher performance than the performance of the communication channel supported by the AP 210, on the basis of status information related to the first communication scheme of the second electronic device 601, which is included in the capability information of the second electronic device 610 related to the first communication scheme.

According to an embodiment, in operation 619, the first electronic device 500 may determine to connect with the second electronic device 601 via the first communication scheme.

The first electronic device 500 may control the communication circuit 510 to connect with the second electronic device 601 through the first communication scheme, on the basis of the confirming that the second electronic device 601 is currently capable of performing communication using the first communication scheme that supports higher performance than the performance of the communication channel supported by the AP 210.

According to an embodiment, in operation 621, the first electronic device 500 and second electronic device 601 may establish a connection with each other through the first communication scheme.

The first electronic device 500 may control the communication circuit 510 to transmit a TDLS setup message to the AP 210. The AP 210 may transmit the TDLS setup message to the second electronic device 601. The TDLS setup message may include identification information of a selected channel, and the selected channel may be a channel of a higher frequency band than the frequency band supported by the AP 210.

The first electronic device 500 may control the communication circuit 510 to select a channel to be generated between the first electronic device 500 and the second electronic device 601, on the basis of capability information of the second electronic device 601 related to the first communication scheme, and transmit the TDLS setup message including the selected channel to the AP 210.

The first electronic device 500 may confirm the same frequency band among the frequency bands supported by the first electronic device 500 and the frequency bands supported by the second electronic device 601, and select one of the same frequency bands (e.g., a communication channel of the highest frequency band) as the communication channel to be generated between the first electronic device 500 and the second electronic device 601. The first electronic device 500 may select one of at least one channel included in one of the same frequency bands as a communication channel to be generated between the first electronic device 500 and the second electronic device 601.

The second electronic device 601 may confirm the identification information of the channel included in the TDLS setup message and perform a series of operations so it is connected to the first electronic device 500 using the selected channel. The second electronic device 601 may perform a series of operations so it is connected to the first electronic device 500 using the selected channel, and then transmit a TDLS setup response message to the AP 210. The AP 210 may transmit the TDLS setup response message received from the second electronic device 601 to the first electronic device 500.

The first electronic device 500 may control the communication circuit 510 to transmit, to the AP 210, a TDLS confirm message (or TDLS setup confirm message) indicating that the TDLS setup response message has been confirmed (or received) after receiving the TDLS setup response message from the AP 210. The AP 210 may transmit the TDLS confirm message transmitted by the first electronic device 500 to the second electronic device 601.

The first electronic device 500 and second electronic device 601 may perform data communication through the selected channel.

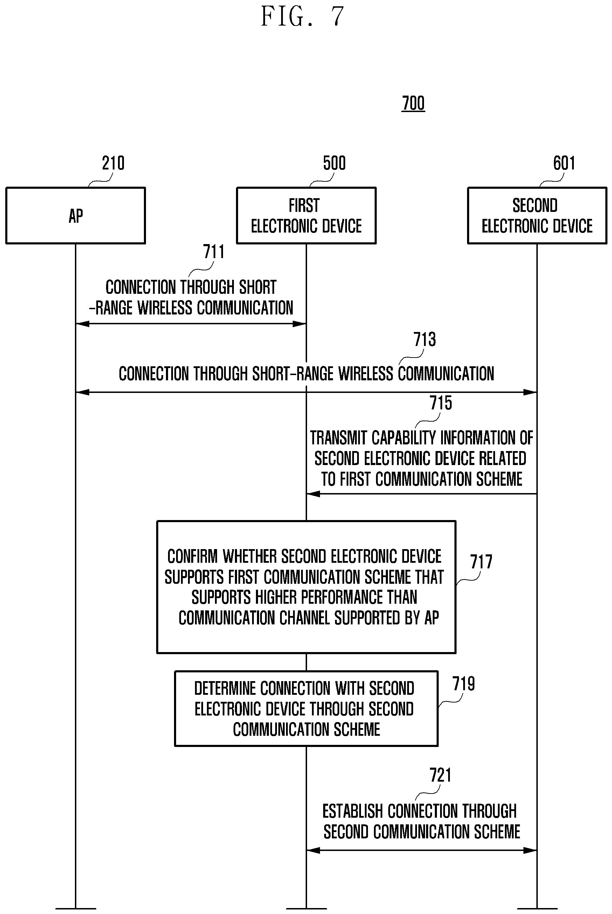

FIG. 7 is a diagram illustrating an embodiment of carrying out a connection through a second communication scheme in an electronic device according to various embodiments of the disclosure, depending on whether an external electronic device supports a first communication scheme using a communication channel having higher performance than a communication channel of a first frequency band between an AP and the electronic device.

With reference to FIG. 7, a first electronic device (e.g., the first electronic device 500 of FIG. 5) may be connected to the AP 210 via short-range wireless communication in operation 711.

The first electronic device 500 may support short-range wireless communication using a frequency band higher than the maximum frequency band supported by the AP 210. For example, the AP 210 may support short-range wireless communication using a first frequency band and may not support short-range wireless communication using a second frequency band or a third frequency band. The first electronic device 500 may perform data transmission or reception through one of a plurality of frequency bands including the second frequency band and/or the third frequency band, which are higher frequency bands than the first frequency band. However, the first electronic device 510 may be connected to the AP 210 through the first frequency band, and may transmit data to the AP 210 or receive data transmitted by the AP 210.

A second electronic device 601 (e.g., the second electronic device 230 of FIG. 2) may be connected to the AP 210 via short-range wireless communication in operation 713.

The second electronic device 601 may support short-range wireless communication using a frequency band higher than the maximum frequency band supported by the AP 210. For example, the AP 210 may support short-range wireless communication using a first frequency band and may not support short-range wireless communication using a second frequency band or a third frequency band. The second electronic device 601 may perform data transmission or reception through one of a plurality of frequency bands including the second frequency band and/or the third frequency band, which are higher frequency bands than the first frequency band. However, the second electronic device 601 may be connected to the AP 210 through the first frequency band, and may transmit data to the AP 210 or receive data transmitted by the AP 210.

The first electronic device 500 may perform a series of operations to perform a direct communication (D2D) connection through short-range wireless communication between the first electronic device 500 and the second electronic device 601 in order to perform a specific service provided by an application, depending on the execution of the application.

The first electronic device 500 may perform a series of operations to perform a direct communication (D2D) connection through short-range wireless communication between the first electronic device 500 and the second electronic device 601 in order to perform a specific service provided by an application, depending on the execution of the application. A direct connection via short-range wireless communication between the first electronic device 500 and the second electronic device 601 may include a first communication scheme (e.g., TDLS scheme) that establishes (or sets up) a communication channel based on data transmitted or received via the AP 210, and a second communication scheme (e.g., Wi-Fi direct and/or NAN) that establishes (or sets up) a communication channel based on data transmitted or received between the first electronic device 500 and the second electronic device 601 without passing through the AP 210.

The first electronic device 500 may discover (e.g., TDLS discovery, discovery scheme (e.g., UPnP, mDNS, Bonjour) using the AP 210) the second electronic device 601 to be directly connected without passing through the first electronic device 500 and the AP 210. The second electronic device 601 discovered through the first communication scheme may be in a state connected to the AP 210 connected to the first electronic device 500.

The first electronic device 500 may broadcast a discovery message (e.g., TDLS discover message) through a channel connected between the first electronic device 500 and the AP 210.

The discovery message may include information of the first electronic device 500 related to the first communication scheme (e.g., an address of the first electronic device 500, capability information of the first electronic device 500, a channel (or frequency band) supported by the first electronic device 500, and/or a channel (or frequency band) preferred by the first electronic device 500). The address of the first electronic device 500 included in the discovery message is an address used in case of receiving data via the first communication scheme, and may include a MAC address or an IP address. The capability information of the first electronic device 500 included in the discovery message is capability information related to the first communication scheme, and for example, the capability information may include a frequency band, a channel band, and/or a maximum number of sessions that may be generated, that is capable of being supported by the first electronic device 500.

According to an embodiment, in operation 715, the second electronic device 601 may transmit, to the first electronic device 500, capability information of the second electronic device 601 related to the first communication scheme.

The second electronic device 601 that has received the discovery message through the AP 210 may confirm the information of the first electronic device 500 related to the first communication scheme included in the discovery message and generate a discovery response message corresponding to the discovery message.

The discovery response message may include information of the second electronic device 601 related to the first communication scheme (e.g., the address of the second electronic device 601, capability information of the second electronic device 601, a channel (or frequency band) supported by the second electronic device 601, and/or a channel (or frequency band) preferred by the second electronic device 601). The address of the second electronic device 601 included in the discovery response message is an address used in case of receiving data through the first communication scheme and may include a MAC address or an IP address. The capability information of the second electronic device 601 included in the discovery message is capability information related to the first communication scheme, and for example, the capability information may include a frequency band, a channel band, and/or a maximum number of sessions that may be generated, that is capable of being supported by the second electronic device 601.

The capability information of the second electronic device 601 may include capability information of the second electronic device 601 related to the first communication scheme.

The capability information of the second electronic device 601 related to the first communication scheme may include information indicating whether the second electronic device 601 supports device-to-device communication using the first communication scheme.

The capability information of the second electronic device 601 related to the first communication scheme may include capability information of the second electronic device 601 related to short-range wireless communication (e.g., Wi-Fi). The capability information of the second electronic device 601 related to the short-range wireless communication may include the frequency band of the short-range wireless communication supported by the second electronic device 601 (e.g., the first frequency band, the second frequency band, and/or the third frequency band), the standard information of the short-range wireless communication supported by the second electronic device 601 (e.g., 802.11ac, 802.11ax, 802.11be), and/or the bandwidth of the channel of the short-range wireless communication supported by the second electronic device 601 (e.g., 80MHz).

The capability information of the second electronic device 601 related to the first communication scheme may include maximum capability information, which is capability information of the short-range wireless communication with the best performance among the short-range wireless communications supported by the second electronic device 601. For example, the capability information of the second electronic device 601 related to short-range wireless communication may include the maximum frequency band of short-range wireless communication supported by the second electronic device 601 (e.g., the third frequency band), the standard with the best performance among the standards of short-range wireless communication supported by the second electronic device 601 (e.g., 802.11be), and/or the largest bandwidth among the bandwidths of the channel of short-range wireless communication supported by the second electronic device 601 (e.g., 80MHz).

The capability information of the second electronic device 601 related to the first communication scheme may include information indicating whether the second electronic device 601 supports the first communication scheme that may implement better performance than the performance of short-range wireless communication supported by the AP 210.

The capability information of the second electronic device 601 related to the first communication scheme may include information indicating whether the second electronic device 601 is capable of performing data transmission or reception in a state where both the communication channel between the AP 210 and the second electronic device 601 and the communication channel using the first communication scheme that may implement better performance than the performance of the short-range wireless communication supported by the AP 210 are activated.

The capability information of the second electronic device 601 related to the first communication scheme may include status information related to the first communication scheme of the second electronic device 601.

The status information related to the first communication scheme of the second electronic device 601 may include information indicating whether the second electronic device 601 is currently capable of establishing a communication channel using the first communication scheme.

The capability information of the second electronic device 601 related to the first communication scheme may include various information in addition to the examples described above.

According to an embodiment, in operation 717, the first electronic device 500 may confirm whether the second electronic device supports the first communication scheme that supports higher performance than the performance of the communication channel supported by the AP 210.

The first electronic device 500 may confirm whether the second electronic device 601 is capable of performing the first communication scheme that supports higher performance than the performance of the communication channel supported by the AP 210, on the basis of the capability information of the second electronic device 601 related to the first communication scheme.

The first electronic device 500 may confirm whether the second electronic device 601 is capable of supporting short-range wireless communication of a higher frequency band than the frequency band of the communication channel supported by the AP 210, on the basis of the capability information of the second electronic device 601 related to short-range wireless communication (e.g., Wi-Fi), which is included in the capability information of the second electronic device 601 related to the first communication scheme.

The first electronic device 500 may confirm whether the second electronic device 601 is capable of performing the first communication scheme that supports higher performance than the performance of the communication channel supported by the AP 210, on the basis of information indicating whether the second electronic device 601 supports the first communication scheme that may implement better performance than the performance of the short-range wireless communication supported by the AP 210, which is included in the capability information of the second electronic device 601 related to the first communication scheme.

The first electronic device 500 may confirm that the second electronic device 601 is capable of performing the first communication scheme that supports higher performance than the performance of the communication channel supported by the AP 210, and may confirm whether the second electronic device 601 is currently capable of performing communication using the first communication scheme that supports higher performance than the performance of the communication channel supported by the AP 210, on the basis of status information related to the first communication scheme of the second electronic device 601, which is included in the capability information of the second electronic device 601 related to the first communication scheme.

According to an embodiment, the first electronic device 500 may determine to connect with the second electronic device 601 via the second communication scheme in operation 719.

The first electronic device 500 may control the communication circuit 510 to the second electronic device 601 through the second communication scheme, on the basis of confirming that the second electronic device 601 supports the first communication scheme that supports higher performance than the performance of the communication channel supported by the AP 210 but cannot currently perform it, or confirming that the second electronic device 601 does not support the first communication scheme that supports higher performance than the performance of the communication channel supported by the AP 210.

According to an embodiment, the first electronic device 500 and second electronic device 601 may establish a mutual connection through the second communication scheme in operation 721.

According to an example, in case that the second communication scheme is Wi-Fi direct, the first electronic device 500 may be connected to the second electronic device 601 through the second communication scheme in a manner of performing group owner (GO) negotiation defined in Wi-Fi direct with the second electronic device 601.

According to an example, in case that the second communication scheme is NAN, the first electronic device 500 may be connected to the second electronic device 601 through the second communication scheme in a manner of performing NAN cluster negotiation and synchronization with the second electronic device 601.

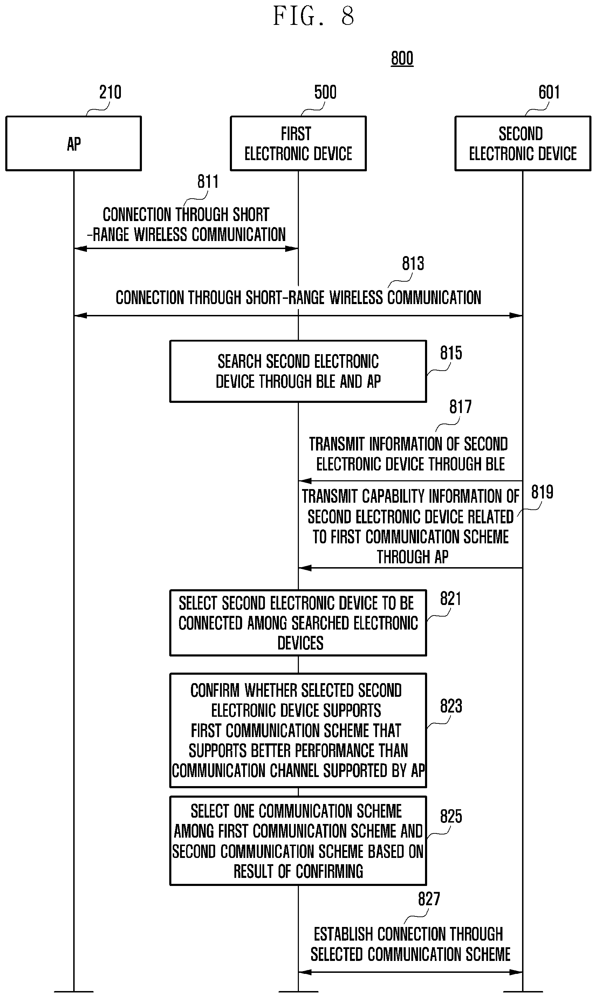

FIG. 8 is a diagram illustrating an embodiment 800 of carrying out a connection through one communication scheme among a first communication scheme and a second communication scheme in an electronic device according to various embodiments of the disclosure, depending on whether an external electronic device supports the first communication scheme using a communication channel having higher performance than a communication channel of a first frequency band between an AP and the electronic device.

With reference to FIG. 8, a first electronic device (e.g., the first electronic device 500 of FIG. 5) may be connected to the AP 210 via short-range wireless communication in operation 811.

The first electronic device 500 may support short-range wireless communication using a frequency band higher than the maximum frequency band supported by the AP 210. For example, the AP 210 may support short-range wireless communication using a first frequency band and may not support short-range wireless communication using a second frequency band or a third frequency band. The first electronic device 500 may perform data transmission or reception through one of a plurality of frequency bands including the second frequency band and/or the third frequency band, which are higher frequency bands than the first frequency band. However, the first electronic device 510 may be connected to the AP 210 through the first frequency band, and may transmit data to the AP 210 or receive data transmitted by the AP 210.

A second electronic device (e.g., the second electronic device 601 of FIG. 6) may be connected to the AP 210 via short-range wireless communication in operation 813.

The second electronic device 601 may support short-range wireless communication using a frequency band higher than the maximum frequency band supported by the AP 210. For example, the AP 210 may support short-range wireless communication using a first frequency band and may not support short-range wireless communication using a second frequency band or a third frequency band. The second electronic device 601 may perform data transmission or reception through one of a plurality of frequency bands including the second frequency band and/or the third frequency band, which are higher frequency bands than the first frequency band. However, the second electronic device 601 may be connected to the AP 210 through the first frequency band, and may transmit data to the AP 210 or receive data transmitted by the AP 210.

The first electronic device 500 may perform a series of operations to perform a direct communication (D2D) connection through short-range wireless communication between the first electronic device 500 and the second electronic device 601 in order to perform a specific service provided by an application, depending on the execution of the application.

The first electronic device 500 may perform a series of operations to perform a direct communication (D2D) connection through short-range wireless communication between the first electronic device 500 and the second electronic device 601 in order to perform a specific service provided by an application, depending on the execution of the application. A direct connection via short-range wireless communication between the first electronic device 500 and the second electronic device 601 may include a first communication scheme (e.g., TDLS scheme) that establishes (or sets up) a communication channel based on data transmitted or received via the AP 210, and a second communication scheme (e.g., Wi-Fi direct and/or NAN) that establishes (or sets up) a communication channel based on data transmitted or received between the first electronic device 500 and the second electronic device 601 without passing through the AP 210.

According to an embodiment, the first electronic device 500 may search the second electronic device 601 through Bluetooth low energy (BLE) and the AP 210 in operation 815.

The first electronic device 500 may discover (e.g., TDLS discovery, discovery scheme (e.g., UPnP, mDNS, Bonjour) using the AP 210) the second electronic device 601 to be directly connected without passing through the first electronic device 500 and the AP 210. The second electronic device 601 discovered through the first communication scheme may be in a state connected to the AP 210 connected to the first electronic device 500.

The first electronic device 500 may discover the second electronic device 601 to be connected through the first communication scheme through another short-range wireless communication scheme (e.g., Bluetooth low energy (BLE), Bluetooth and/or UWB). The first electronic device 500 may further include a second communication circuit (not illustrated) that supports another short-range wireless communication, and the first electronic device 500 may control the second communication circuit to perform a process of discovering the second electronic device 601 connected through the first communication scheme.

The first electronic device 500 may sequentially or simultaneously perform a search operation of the second electronic device 601 through the AP 210 and a search operation of the second electronic device 601 using BLE.

The first electronic device 500 may search a plurality of external electronic devices including the second electronic device 601. In case that a plurality of external electronic devices are searched, the first electronic device 500 may carry out a connection procedure with an external electronic device (e.g., the second electronic device 601) connected to the same AP as the AP connected to the first electronic device 500. Alternatively, in case that a plurality of external electronic devices are searched, the first electronic device 500 may output (or display) a list of the plurality of external electronic devices, and select the second electronic device 601 through various types of user input and connect with the second electronic device 601.

According to an embodiment, in operation 817, the second electronic device 601 may transmit information of the second electronic device 601 to the first electronic device 500 via BLE.

The information of the second electronic device 601 may include information of the second electronic device 601 related to BLE, address information for short-range wireless communication (e.g., Wi-Fi) of the second electronic device 601, information of an AP connected to the second electronic device 601 (e.g., identification information of the AP), and/or information indicating whether the second electronic device 601 supports the first communication scheme.

According to an embodiment, in operation 819, the second electronic device 601 may transmit capability information of the second electronic device 601 related to the first communication scheme to the first electronic device 500 via the AP 210.

The second electronic device 601 that has received the discovery message through the AP 210 may confirm the information of the first electronic device 500 related to the first communication scheme, which is included in the discovery message, and generate a discovery response message corresponding to the discovery message.

The discovery response message may include information of the second electronic device 601 related to the first communication scheme (e.g., the address of the second electronic device 601, capability information of the second electronic device 601, a channel (or frequency band) supported by the second electronic device 601, and/or a channel (or frequency band) preferred by the second electronic device 601). The address of the second electronic device 601 included in the discovery response message is an address used in case of receiving data through the first communication scheme and may include a MAC address or an IP address. The capability information of the second electronic device 601 included in the discovery message is capability information related to the first communication scheme, and for example, the capability information may include a frequency band, a channel band, and/or a maximum number of sessions that may be generated, that is capable of being supported by the second electronic device 601.

The capability information of the second electronic device 601 may include capability information of the second electronic device 601 related to the first communication scheme.

The capability information of the second electronic device 601 related to the first communication scheme may include information indicating whether the second electronic device 601 supports device-to-device communication using the first communication scheme.

The capability information of the second electronic device 601 related to the first communication scheme may include capability information of the second electronic device 601 related to short-range wireless communication (e.g., Wi-Fi). The capability information of the second electronic device 601 related to the short-range wireless communication may include the frequency band of the short-range wireless communication supported by the second electronic device 601 (e.g., the first frequency band, the second frequency band, and/or the third frequency band), the standard information of the short-range wireless communication supported by the second electronic device 601 (e.g., 802.11ac, 802.11ax, 802.11be), and/or the bandwidth of the channel of the short-range wireless communication supported by the second electronic device 601 (e.g., 80MHz).

The capability information of the second electronic device 601 related to the first communication scheme may include maximum capability information, which is capability information of the short-range wireless communication with the best performance among the short-range wireless communications supported by the second electronic device 601. For example, the capability information of the second electronic device 601 related to short-range wireless communication may include the maximum frequency band of short-range wireless communication supported by the second electronic device 601 (e.g., the third frequency band), the standard with the best performance among the standards of short-range wireless communication supported by the second electronic device 601 (e.g., 802.11be), and/or the largest bandwidth among the bandwidths of the channel of short-range wireless communication supported by the second electronic device 601 (e.g., 80MHz).

The capability information of the second electronic device 601 related to the first communication scheme may include information indicating whether the second electronic device 601 supports the first communication scheme that may implement better performance than the performance of short-range wireless communication supported by the AP 210.

The capability information of the second electronic device 601 related to the first communication scheme may include information indicating whether the second electronic device 601 is capable of performing data transmission or reception in a state where both the communication channel between the AP 210 and the second electronic device 601 and the communication channel using the first communication scheme that may implement better performance than the performance of the short-range wireless communication supported by the AP 210 are activated.

The capability information of the second electronic device 601 related to the first communication scheme may include status information related to the first communication scheme of the second electronic device 601.

The status information related to the first communication scheme of the second electronic device 601 may include information indicating whether the second electronic device 601 is currently capable of establishing a communication channel using the first communication scheme.

The capability information of the second electronic device 601 related to the first communication scheme may include various information in addition to the examples described above.

According to an embodiment, in operation 821, the first electronic device 500 may select an electronic device (e.g., the second electronic device 601) to be connected among external electronic devices searched via BLE.

The first electronic device 500 may provide a user interface including a list of searched external electronic devices to the user through various schemes (e.g., sound or screen). The first electronic device 500 may receive a user input for selecting an electronic device to be connected through various schemes (e.g., voice input or user input on a display), and select an electronic device to be connected based on the user input.

Operation 821 may be performed before operation 819. In case that operation 821 is performed before operation 819, operation 819 may be performed by the selected electronic device.

According to an embodiment, in operation 823, the first electronic device 500 may confirm whether the second electronic device 601, which is the selected electronic device, supports the first communication scheme that supports better performance than the communication channel supported by the AP 210.

The first electronic device 500 may confirm whether the second electronic device 601 is capable of performing the first communication scheme that supports higher performance than the performance of the communication channel supported by the AP 210, on the basis of the capability information of the second electronic device 601 related to the first communication scheme.

The first electronic device 500 may confirm whether the second electronic device 601 is capable of supporting short-range wireless communication of a higher frequency band than the frequency band of the communication channel supported by the AP 210, on the basis of the capability information of the second electronic device 601 related to short-range wireless communication (e.g., Wi-Fi), which is included in the capability information of the second electronic device 601 related to the first communication scheme.

The first electronic device 500 may confirm whether the second electronic device 601 is capable of performing the first communication scheme that supports higher performance than the performance of the communication channel supported by the AP 210, on the basis of information indicating whether the second electronic device 601 supports the first communication scheme that may implement better performance than the performance of the short-range wireless communication supported by the AP 210, which is included in the capability information of the second electronic device 601 related to the first communication scheme.

The first electronic device 500 may confirm that the second electronic device 601 is capable of performing the first communication scheme that supports higher performance than the performance of the communication channel supported by the AP 210, and may confirm whether the second electronic device 601 is currently capable of performing communication using the first communication scheme that supports higher performance than the performance of the communication channel supported by the AP 210, on the basis of status information related to the first communication scheme of the second electronic device 601, which is included in the capability information of the second electronic device 601 related to the first communication scheme.

According to an embodiment, in operation 825, the first electronic device 500 may select one communication scheme among the first communication scheme and the second communication scheme, based on the confirming result.

According to an embodiment, the first electronic device 500 may control the communication circuit 510 to connect with the second electronic device 601 via the first communication scheme, on the basis of confirming that the second electronic device 601 is currently capable of performing communication using the first communication scheme that supports higher performance than the performance of the communication channel supported by the AP 210.

According to an embodiment, the first electronic device 500 may control the communication circuit 510 to connect with the second electronic device 601 through the second communication scheme, on the basis of the confirming that the second electronic device 601 supports the first communication scheme that supports higher performance than the performance of the communication channel supported by the AP 210 but cannot currently perform it, or confirming that the second electronic device 601 does not support the first communication scheme that supports higher performance than the performance of the communication channel supported by the AP 210.

According to an embodiment, the first electronic device 500 and second electronic device 601 may carry out a connection through the selected communication scheme in operation 827.

The first electronic device 500 may select the first communication scheme and perform a series of operations for connection to the second electronic device 601 through the first communication scheme.

The first electronic device 500 may control the communication circuit 510 to transmit a TDLS setup message to the AP 210. The AP 210 may transmit the TDLS setup message to the second electronic device 601. The TDLS setup message may include identification information of a selected channel, and the selected channel may be a channel of a higher frequency band than the frequency band supported by the AP 210.

The first electronic device 500 may control the communication circuit 510 to select a channel to be generated between the first electronic device 500 and the second electronic device 601, on the basis of the capability information of the second electronic device 601 related to the first communication scheme, and transmit the TDLS setup message including the selected channel to the AP 210.

The first electronic device 500 may confirm the same frequency band among the frequency bands supported by the first electronic device 500 and the frequency bands supported by the second electronic device 601, and select a communication channel of the highest frequency band among the same frequency bands as a communication channel to be generated between the first electronic device 500 and the second electronic device 601. The first electronic device 500 may select one channel among at least one channel included in one of the same frequency bands as a communication channel to be generated between the first electronic device 500 and the second electronic device 601.

The second electronic device 601 may confirm the identification information of the channel included in the TDLS setup message and perform a series of operations so it is connected to the first electronic device 500 using the selected channel. The second electronic device 601 may perform a series of operations so it is connected to the first electronic device 500 using the selected channel, and then transmit a TDLS setup response message to the AP 210. The AP 210 may transmit the TDLS setup response message received from the second electronic device 601 to the first electronic device 500.

The first electronic device 500 may control the communication circuit 510 to transmit, to the AP 210, a TDLS confirm message (or TDLS setup confirm message) indicating that the TDLS setup response message has been confirmed (or received) after receiving the TDLS setup response message from the AP 210. The AP 210 may transmit the TDLS confirm message transmitted by the first electronic device 500 to the second electronic device 601.

The first electronic device 500 and second electronic device 601 may perform data communication through the selected channel.

The first electronic device 500 may select the second communication scheme and perform a series of operations for connection to the second electronic device 601 through the second communication scheme.

According to an example, in case that the second communication scheme is Wi-Fi direct, the first electronic device 500 may be connected to the second electronic device 601 through the second communication scheme in a manner of performing group owner (GO) negotiation defined in Wi-Fi direct with the second electronic device 601.

According to an example, in case that the second communication scheme is NAN, the first electronic device 500 may be connected to the second electronic device 601 through the second communication scheme in a manner of performing NAN cluster negotiation and synchronization with the second electronic device 601.

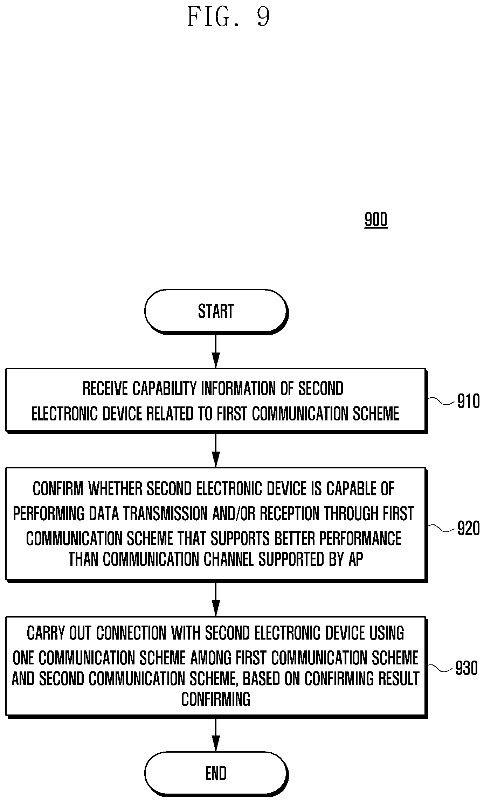

FIG. 9 is an operation flowchart 900 illustrating an operation method of an electronic device according to various embodiments of the disclosure.

According to an embodiment, in operation 910, a first electronic device (e.g., the first electronic device 500 of FIG. 5) may receive capability information of a second electronic device (e.g., the electronic device 601 of FIG. 6) related to a first communication scheme.

The first electronic device 500 may support short-range wireless communication using a frequency band higher than the maximum frequency band supported by the AP 210. For example, the AP 210 may support short-range wireless communication using a first frequency band and may not support short-range wireless communication using a second frequency band or a third frequency band. The first electronic device 500 may perform data transmission or reception through one of a plurality of frequency bands including the second frequency band and/or the third frequency band, which are higher frequency bands than the first frequency band. However, the first electronic device 510 may be connected to the AP 210 through the first frequency band, and may transmit data to the AP 210 or receive data transmitted by the AP 210.

The first electronic device 500 may perform a series of operations to perform a direct communication (D2D) connection through short-range wireless communication between the first electronic device 500 and the second electronic device 601 in order to perform a specific service provided by an application, depending on the execution of the application.

The first electronic device 500 may perform a series of operations to perform a direct communication (D2D) connection through short-range wireless communication between the first electronic device 500 and the second electronic device 601 in order to perform a specific service provided by an application, depending on the execution of the application. A direct connection via short-range wireless communication between the first electronic device 500 and the second electronic device 601 may include a first communication scheme (e.g., TDLS scheme) that establishes (or sets up) a communication channel based on data transmitted or received via the AP 210, and a second communication scheme (e.g., Wi-Fi direct and/or NAN) that establishes (or sets up) a communication channel based on data transmitted or received between the first electronic device 500 and the second electronic device 601 without passing through the AP 210.

The first electronic device 500 may discover (e.g., TDLS discovery, discovery scheme (e.g., UPnP, mDNS, Bonjour) using the AP 210) the second electronic device 601 to be directly connected without passing through the first electronic device 500 and the AP 210. The second electronic device 601 discovered through the first communication scheme may be in a state connected to the AP 210 connected to the first electronic device 500.

The first electronic device 500 may broadcast a discovery message (e.g., TDLS discover message) through a channel connected between the first electronic device 500 and the AP 210.

The discovery message may include information of the first electronic device 500 related to the first communication scheme (e.g., an address of the first electronic device 500, capability information of the first electronic device 500, a channel (or frequency band) supported by the first electronic device 500, and/or a channel (or frequency band) preferred by the first electronic device 500). The address of the first electronic device 500 included in the discovery message is an address used in case of receiving data via the first communication scheme, and may include a MAC address or an IP address. The capability information of the first electronic device 500 included in the discovery message is capability information related to the first communication scheme, and for example, the capability information may include a frequency band, a channel band, and/or a maximum number of sessions that may be generated, that is capable of being supported by the first electronic device 500.

The second electronic device 601 that has received the discovery message through the AP 210 may confirm the information of the first electronic device 500 related to the first communication scheme included in the discovery message and generate a discovery response message corresponding to the discovery message.

The discovery response message may include information of the second electronic device 601 related to the first communication scheme (e.g., the address of the second electronic device 601, capability information of the second electronic device 601, a channel (or frequency band) supported by the second electronic device 601, and/or a channel (or frequency band) preferred by the second electronic device 601). The address of the second electronic device 601 included in the discovery response message is an address used in case of receiving data through the first communication scheme and may include a MAC address or an IP address. The capability information of the second electronic device 601 included in the discovery message is capability information related to the first communication scheme, and for example, the capability information may include a frequency band, a channel band, and/or a maximum number of sessions that may be generated, that is capable of being supported by the second electronic device 601.

The capability information of the second electronic device 601 may include capability information of the second electronic device 601 related to the first communication scheme.

The capability information of the second electronic device 601 related to the first communication scheme may include information indicating whether the second electronic device 601 supports device-to-device communication using the first communication scheme.

The capability information of the second electronic device 601 related to the first communication scheme may include capability information of the second electronic device 601 related to short-range wireless communication (e.g., Wi-Fi). The capability information of the second electronic device 601 related to the short-range wireless communication may include the frequency band of the short-range wireless communication supported by the second electronic device 601 (e.g., the first frequency band, the second frequency band, and/or the third frequency band), the standard information of the short-range wireless communication supported by the second electronic device 601 (e.g., 802.11ac, 802.11ax, 802.11be), and/or the bandwidth of the channel of the short-range wireless communication supported by the second electronic device 601 (e.g., 80MHz).

The capability information of the second electronic device 601 related to the first communication scheme may include maximum capability information, which is capability information of the short-range wireless communication with the best performance among the short-range wireless communications supported by the second electronic device 601. For example, the capability information of the second electronic device 601 related to short-range wireless communication may include the maximum frequency band of short-range wireless communication supported by the second electronic device 601 (e.g., the third frequency band), the standard with the best performance among the standards of short-range wireless communication supported by the second electronic device 601 (e.g., 802.11be), and/or the largest bandwidth among the bandwidths of the channel of short-range wireless communication supported by the second electronic device 601 (e.g., 80MHz).

The capability information of the second electronic device 601 related to the first communication scheme may include information indicating whether the second electronic device 601 supports the first communication scheme that may implement better performance than the performance of short-range wireless communication supported by the AP 210.

The first communication scheme that may implement better performance than the performance of short-range wireless communication supported by the AP 210 may mean device-to-device communication using a higher frequency band than the frequency band supported by the AP 210.

For example, in case that the AP 210 supports data transmission or reception using the first frequency band and does not support data transmission or reception using the second frequency band and/or the third frequency band, but the second electronic device 601 supports the first communication scheme through a communication channel of the first frequency band, the second frequency band, and/or the third frequency band, the second electronic device 601 may be an electronic device that supports the first communication scheme that may implement better performance than the performance of the short-range wireless communication supported by the AP 210.

**In** case that the second electronic device 601 supports the first communication scheme that may implement better performance than the performance of the short-range wireless communication supported by the AP 210, the second electronic device 601 may transmit, to the first electronic device 500, capability information of the second electronic device 601 related to the first communication scheme, which includes information indicating that the second electronic device 601 supports the first communication scheme that may implement better performance than the performance of the short-range wireless communication supported by the AP 210.

For another example, in case that the AP 210 supports data transmission or reception using the first frequency band and does not support data transmission or reception using the second frequency band and/or the third frequency band, but the second electronic device 601 supports the first communication scheme through the communication channel of the first frequency band and does not support the first communication scheme through the communication channel of the second frequency band and/or the third frequency band (e.g., supporting performance dependent on the AP 210), the second electronic device 601 may be an electronic device that does not support the first communication scheme that may implement better performance than the performance of the short-range wireless communication supported by the AP 210.

In case that the second electronic device 601 does not support the first communication scheme that may implement better performance than the performance of the short-range wireless communication supported by the AP 210, the second electronic device 601 may transmit, to the first electronic device 500, capability information of the second electronic device 601 related to the first communication scheme, which includes information indicating that the second electronic device 601 does not support the first communication scheme that may implement better performance than the performance of the short-range wireless communication supported by the AP 210.

The capability information of the second electronic device 601 related to the first communication scheme may include information indicating whether the second electronic device 601 may perform data transmission or reception in a state where both the communication channel between the AP 210 and the second electronic device 601 and the communication channel using the first communication scheme that may implement better performance than the performance of the short-range wireless communication supported by the AP 210 are activated.

Depending on the performance of the communication circuit of the second electronic device 601, the second electronic device 601 may support a function (e.g., real simultaneous dual band (RSDB) and/or dual band simultaneous (DBS)) that enables the second electronic device 601 to simultaneously perform a transmission and/or reception operation of a signal through a communication channel between the AP 210 and the second electronic device 601 and a transmission and/or reception operation of a signal through a communication channel using the first communication scheme that may implement better performance than the performance of short-range wireless communication supported by the AP 210.

In case that the AP 210 and second electronic device 601 are connected through a communication channel of a first frequency band, and the first electronic device 500 may be connected to the second electronic device 601 through a third frequency band, and the communication circuit of the second electronic device 601 may perform transmission and/or reception of a signal through the third frequency band while performing transmission and/or reception of a signal through the first frequency band, the second electronic device 601 may perform data transmission or reception in a state where both the communication channel between the AP 210 and the second electronic device 601 and the communication channel using the first communication scheme that may implement better performance than the performance of the short-range wireless communication supported by the AP 210 are activated. The second electronic device 601 may transmit, to the first electronic device 500, capability information of the second electronic device 601 related to the first communication scheme, which includes information indicating that the second electronic device 601 may perform data transmission or reception in a state where both the communication channel between the AP 210 and the second electronic device 601 and the communication channel using the first communication scheme that may implement better performance than the performance of the short-range wireless communication supported by the AP 210 are activated.

In case that the AP 210 and second electronic device 601 are connected through a communication channel of a first frequency band, and the first electronic device 500 may be connected to the second electronic device 601 through a third frequency band, and the communication circuit of the second electronic device 601 may not perform transmission and/or reception of a signal through the third frequency band while performing transmission and/or reception of a signal through the first frequency band, the second electronic device 601 may not perform data transmission or reception in a state where both the communication channel between the AP 210 and the second electronic device 601 and the communication channel using the first communication scheme that may implement better performance than the performance of the short-range wireless communication supported by the AP 210 are activated. The second electronic device 601 may transmit, to the first electronic device 500, capability information of the second electronic device 601 related to the first communication scheme, which includes information indicating that the second electronic device 601 may not perform data transmission or reception in a state where both the communication channel between the AP 210 and the second electronic device 601 and the communication channel using the first communication scheme that may implement better performance than the performance of the short-range wireless communication supported by the AP 210 are activated.

The capability information of the second electronic device 601 related to the first communication scheme may include status information related to the first communication scheme of the second electronic device 601.

The status information related to the first communication scheme of the second electronic device 601 may include information indicating whether the second electronic device 601 is currently capable of establishing a communication channel using the first communication scheme.

The second electronic device 601 may not be able to establish a communication channel using the first communication scheme with the first electronic device 500 due to various situations (e.g., the second electronic device 601 may transmit or receive data through a communication channel using the first communication scheme with another electronic device). The second electronic device 601 may transmit, to the first electronic device 500, capability information of the second electronic device 601 including information indicating that the second electronic device 601 is currently unable to establish a communication channel using the first communication scheme.

The capability information of the second electronic device 601 related to the first communication scheme may include various information in addition to the examples described above.

According to an embodiment, in operation 920, the first electronic device 500 may confirm whether the second electronic device 601 is capable of performing data transmission or reception through the first communication scheme using a communication channel having better performance than the performance of the communication channel supported by the AP 210.

The first electronic device 500 may confirm whether the second electronic device 601 is capable of performing the first communication scheme that supports higher performance than the performance of the communication channel supported by the AP 210, on the basis of the capability information of the second electronic device 601 related to the first communication scheme.

The first electronic device 500 may confirm whether the second electronic device 601 is capable of supporting short-range wireless communication of a higher frequency band than the frequency band of the communication channel supported by the AP 210, on the basis of the capability information of the second electronic device 601 related to short-range wireless communication (e.g., Wi-Fi), which is included in the capability information of the second electronic device 601 related to the first communication scheme.

The first electronic device 500 may confirm whether the second electronic device 601 is capable of performing the first communication scheme supporting higher performance than the performance of the communication channel supported by the AP 210, on the basis of information indicating whether the second electronic device 601 supports the first communication scheme that implements better performance than the performance of the short-range wireless communication supported by the AP 210, which is included in the capability information of the second electronic device 601 related to the first communication scheme.

The first electronic device 500 may confirm that the second electronic device 601 is capable of performing the first communication scheme supporting higher performance than the performance of the communication channel supported by the AP 210, and may confirm whether the second electronic device 601 is currently capable of performing communication using the first communication scheme supporting higher performance than the performance of the communication channel supported by the AP 210, on the basis of status information related to the first communication scheme of the second electronic device 601, which is included in the capability information of the second electronic device 601 related to the first communication scheme.

According to an embodiment, in operation 930, the first electronic device 500 may carry out a connection with the second electronic device 601 using one communication scheme among the first communication scheme and the second communication scheme based on the confirming result.

The first electronic device 500 may control the communication circuit 510 to connect with the second electronic device 601 through the first communication scheme, on the basis of the confirming that the second electronic device 601 is currently capable of performing communication using the first communication scheme that supports higher performance than the performance of the communication channel supported by the AP 210.

The first electronic device 500 may control the communication circuit 510 to transmit a TDLS setup message to the AP 210. The AP 210 may transmit the TDLS setup message to the second electronic device 601. The TDLS setup message may include identification information of a selected channel, and the selected channel may be a channel of a higher frequency band than the frequency band supported by the AP 210.

The first electronic device 500 may control the communication circuit 510 to select a channel to be generated between the first electronic device 500 and the second electronic device 601, on the basis of the capability information of the second electronic device 601 related to the first communication scheme, and transmit the TDLS setup message including the selected channel to the AP 210.

The first electronic device 500 may confirm the same frequency band among the frequency bands supported by the first electronic device 500 and the frequency bands supported by the second electronic device 601, and select a communication channel of the highest frequency band among the same frequency bands as a communication channel to be generated between the first electronic device 500 and the second electronic device 601. The first electronic device 500 may select one channel among at least one channel included in one of the same frequency bands as a communication channel to be generated between the first electronic device 500 and the second electronic device 601.

The second electronic device 601 may confirm the identification information of the channel included in the TDLS setup message and perform a series of operations so it is connected to the first electronic device 500 using the selected channel. The second electronic device 601 may perform a series of operations so it is connected to the first electronic device 500 using the selected channel, and then transmit a TDLS setup response message to the AP 210. The AP 210 may transmit the TDLS setup response message received from the second electronic device 601 to the first electronic device 500.

The first electronic device 500 may control the communication circuit 510 to transmit, to the AP 210, a TDLS confirm message (or TDLS setup confirm message) indicating that the TDLS setup response message has been confirmed (or received) after receiving the TDLS setup response message from the AP 210. The AP 210 may transmit the TDLS confirm message transmitted by the first electronic device 500 to the second electronic device 601.

The first electronic device 500 and second electronic device 601 may perform data communication through the selected channel.

The first electronic device 500 may control the communication circuit 510 to connect with the second electronic device 601 via the second communication scheme, on the basis of confirming that the second electronic device 601 supports the first communication scheme that supports higher performance than the performance of the communication channel supported by the AP 210 but cannot currently perform it, or confirming that the second electronic device 601 does not support the first communication scheme that supports higher performance than the performance of the communication channel supported by the AP 210.

An electronic device (e.g., the first electronic device 500 of FIG. 5) according to an embodiment of the disclosure may comprise a communication circuit (e.g., the communication circuit 510 of FIG. 5) which is connected to an access point (AP) 210 through a communication channel of a first frequency band and performs short-range wireless communication, and a processor (e.g., the processor 520 of FIG. 5) which is operatively connected to the communication circuit 510. The processor 520, on the basis of data transmitted or received through the AP (e.g., the AP 210 of FIG. 2), may receive capability information of an external electronic device 601, related to a first communication scheme for generating a communication channel between the external electronic device 601 and the electronic device 500. The processor 520, on the basis of the capability information of the external electronic device 601, related to the first communication scheme, and capability information of the AP 210, may confirm whether the external electronic device 601 is capable of performing data transmission or reception through the first communication scheme which supports higher performance than a communication channel supported by the AP 210. The processor 520, on the basis of the result of confirming, may be configured so as to carry out connection with the external electronic device 601 by using one communication scheme among the first communication scheme and a second communication scheme which enables the generation of the communication channel between the external electronic device 601 and the electronic device 500, without using the AP 210.

In the electronic device 500 according to an embodiment of the disclosure, the capability information of the external electronic device 601, related to the first communication scheme, may include maximum capability information of the external electronic device 601, related to short-range wireless communication.

In the electronic device 500 according to an embodiment of the disclosure, the maximum capability information of the external electronic device 601 may include standard information of short-range wireless communication that is capable of being supported by the external electronic device 601 and bandwidth information of short-range wireless communication that is capable of being supported by the external electronic device 601.

In the electronic device 500 according to an embodiment of the disclosure, the capability information of the external electronic device 601, related to the first communication scheme, may include information indicating whether to support the first communication scheme using better performance than performance of short-range wireless communication supported by the AP 210.

In the electronic device 500 according to an embodiment of the disclosure, the capability information of the external electronic device 601, related to the first communication scheme, may include information indicating whether data transmission or reception is possible using both a communication channel between the AP 210 and the external electronic device 601 and a communication channel between the electronic device 500 and the external electronic device 601 generated using the first communication scheme that uses better performance than performance of short-range wireless communication supported by the AP 210.

In the electronic device 500 according to an embodiment of the disclosure, the processor 520 may be configured to carry out a connection with the external electronic device 601 through the first communication scheme, on the basis of confirming that the external electronic device 601 is capable of performing the first communication scheme that supports higher performance than a communication channel of the first frequency band.

**In** the electronic device 500 according to an embodiment of the disclosure, the processor 520 may be configured to carry out a connection with the external electronic device 601 through the second communication scheme, on the basis of confirming that the external electronic device 601 is capable of performing the first communication scheme using a communication channel having the first frequency band.

In the electronic device 500 according to an embodiment of the disclosure, the processor 520 may be configured to carry out a connection with the external electronic device 601 through one communication scheme among the first communication scheme and the second communication scheme, on the basis of a comparison result of a maximum performance of the first communication scheme and a maximum performance of the second communication scheme.

In the electronic device 500 according to an embodiment of the disclosure, the processor 520 may be configured to determine the maximum performance of the second communication scheme, on the basis of maximum capability information of the external electronic device 601 related to short-range wireless communication, which is included in the capability information of the external electronic device 601 related to the first communication scheme.

In the electronic device 500 according to an embodiment of the disclosure, the first communication scheme and the second communication scheme may be a communication scheme in which the electronic device 500 and the external electronic device 601 are directly connected (device to device, D2D).

An operation method of an electronic device (e.g., the first electronic device 500 of FIG. 5) according to an embodiment of the disclosure may comprise receiving, on the basis of data transmitted or received through an AP (e.g., the AP 210 of FIG. 2) connected through a communication channel of a first frequency band, capability information of an external electronic device (e.g., a second electronic device 601 of FIG., 6), related to a first communication scheme for generating a communication channel between the external electronic device 601 and the electronic device 500. The operation method of the electronic device 500 may comprise confirming, on the basis of the capability information of the external electronic device 601, related to the first communication scheme, and capability information of the AP 210, whether the external electronic device 601 is capable of performing the first communication scheme which supports higher performance than a communication channel supported by the AP 210. The operation method of the electronic device 500 may comprise performing, on the basis of the result of confirming, connection with the external electronic device 601 by using one communication scheme among the first communication scheme and a second communication scheme which enables the generation of the communication channel between the external electronic device 601 and the electronic device 500 without using the AP 210.

In the operation method of the electronic device 500 according to the disclosure, the capability information of the external electronic device 601, related to the first communication scheme, may include maximum capability information of the external electronic device 601, related to short-range wireless communication.

In the operation method of the electronic device 500 according to the disclosure, the maximum capability information of the external electronic device 601 may include standard information of short-range wireless communication that is capable of being supported by the external electronic device 601 and bandwidth information of short-range wireless communication that is capable of being supported by the external electronic device 601.

In the operation method of the electronic device 500 according to the disclosure, the capability information of the external electronic device 601, related to the first communication scheme, may include information indicating whether to support the first communication scheme using better performance than performance of short-range wireless communication supported by the AP 210.

In the operation method of the electronic device 500 according to the disclosure, the capability information of the external electronic device 601, related to the first communication scheme, may include information indicating whether data transmission or reception is possible using both a communication channel between the AP 210 and the external electronic device 601 and a communication channel between the electronic device 500 and the external electronic device 601 generated using the first communication scheme that uses better performance than performance of short-range wireless communication supported by the AP 210.

In the operation method of the electronic device 500 according to the disclosure, the connecting with the external electronic device 601 may include carrying out a connection with the external electronic device 601 through the first communication scheme, on the basis of confirming that the external electronic device 601 is capable of performing the first communication scheme that supports higher performance than a communication channel of the first frequency band.

In the operation method of the electronic device 500 according to the disclosure, the connecting with the external electronic device 601 may include carrying out a connection with the external electronic device 601 through the second communication scheme, on the basis of confirming that the external electronic device 601 is capable of performing the first communication scheme using a communication channel having the first frequency band.

In the operation method of the electronic device 500 according to the disclosure, the connecting with the external electronic device 601 may include carrying out a connection with the external electronic device 601 through one communication scheme among the first communication scheme and the second communication scheme, on the basis of a comparison result of a maximum performance of the first communication scheme and a maximum performance of the second communication scheme.

The operation method of the electronic device 500 according to the disclosure may further comprise determining the maximum performance of the second communication scheme, on the basis of maximum capability information of the external electronic device 601 related to short-range wireless communication, which is included in the capability information of the external electronic device 601 related to the first communication scheme.

In the operation method of the electronic device 500 according to the disclosure, the first communication scheme and the second communication scheme may be a communication scheme in which the electronic device 500 and the external electronic device 601 are directly connected (device to device, D2D).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. **In** such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a communication circuit which is connected to an access point (AP) through a communication channel of a first frequency band and performs out short-range wireless communication; and
a processor which is operatively connected to the communication circuit,
wherein the processor, on the basis of data transmitted or received through the AP, receives capability information of an external electronic device, related to a first communication scheme for generating a communication channel between the external electronic device and the electronic device,
wherein the processor, on the basis of the capability information of the external electronic device, related to the first communication scheme, and capability information of the AP, confirms whether the external electronic device is capable of performing data transmission or reception through the first communication scheme which supports higher performance than a communication channel supported by the AP, and
wherein the processor, on the basis of the result of confirming, is configured so as to carry out connection with the external electronic device by using one communication scheme among the first communication scheme and a second communication scheme which enables the generation of the communication channel between the external electronic device and the electronic device without using the AP.

2. The electronic device of claim 1, wherein the capability information of the external electronic device, related to the first communication scheme, includes maximum capability information of the external electronic device, related to short-range wireless communication.

3. The electronic device of claim 2, wherein the maximum capability information of the external electronic device includes standard information of short-range wireless communication that is capable of being supported by the external electronic device and bandwidth information of short-range wireless communication that is capable of being supported by the external electronic device.

4. The electronic device of claim 1, wherein the capability information of the external electronic device, related to the first communication scheme, includes information indicating whether to support the first communication scheme using better performance than performance of short-range wireless communication supported by the AP.

5. The electronic device of claim 1, wherein the capability information of the external electronic device, related to the first communication scheme, includes information indicating whether data transmission or reception is possible using both a communication channel between the AP and the external electronic device and a communication channel between the electronic device and the external electronic device generated using the first communication scheme that uses better performance than performance of short-range wireless communication supported by the AP.

6. The electronic device of claim 1, wherein the processor is configured to carry out a connection with the external electronic device through the first communication scheme, on the basis of confirming that the external electronic device is capable of performing the first communication scheme that supports higher performance than a communication channel of the first frequency band.

7. The electronic device of claim 1, wherein the processor is configured to carry out a connection with the external electronic device through the second communication scheme, on the basis of confirming that the external electronic device is capable of performing the first communication scheme using a communication channel having the first frequency band.

8. The electronic device of claim 1, wherein the processor is configured to carry out a connection with the external electronic device through one communication scheme among the first communication scheme and the second communication scheme, on the basis of a comparison result of a maximum performance of the first communication scheme and a maximum performance of the second communication scheme.

9. The electronic device of claim 8, wherein the processor is configured to determine the maximum performance of the second communication scheme, on the basis of maximum capability information of the external electronic device related to short-range wireless communication, which is included in the capability information of the external electronic device related to the first communication scheme.

10. The electronic device of claim 1, wherein the first communication scheme and the second communication scheme is a communication scheme in which the electronic device and the external electronic device are directly connected (device to device, D2D)

11. An operation method of an electronic device, comprising:
receiving, on the basis of data transmitted or received through an AP connected through a communication channel of a first frequency band, capability information of an external electronic device, related to a first communication scheme for generating a communication channel between the external electronic device and the electronic device;
confirming, on the basis of the capability information of the external electronic device, related to the first communication scheme, and capability information of the AP, whether the external electronic device is capable of performing the first communication scheme which supports higher performance than a communication channel supported by the AP; and
performing, on the basis of the result of confirming, connection with the external electronic device by using one communication scheme among the first communication scheme and a second communication scheme which enables the generation of the communication channel between the external electronic device and the electronic device without using the AP.

12. The operation method of an electronic device of claim 11, wherein the capability information of the external electronic device, related to the first communication scheme, includes maximum capability information of the external electronic device, related to short-range wireless communication.

13. The operation method of an electronic device of claim 12, wherein the maximum capability information of the external electronic device includes standard information of short-range wireless communication that is capable of being supported by the external electronic device and bandwidth information of short-range wireless communication that is capable of being supported by the external electronic device.

14. The operation method of an electronic device of claim 11, wherein the capability information of the external electronic device, related to the first communication scheme, includes information indicating whether to support the first communication scheme that uses better performance than performance of short-range wireless communication supported by the AP.

15. The operation method of an electronic device of claim 11, wherein the capability information of the external electronic device, related to the first communication scheme, includes information indicating whether data transmission or reception is possible using both a communication channel between the AP and the external electronic device and a communication channel between the electronic device and the external electronic device generated using the first communication scheme that uses better performance than performance of short-range wireless communication supported by the AP.
